# EUROPEAN PATENT APPLICATION

(11) **EP 4 729 803 A1**
(43) Date of publication of application: **22.04.2026**
(21) Application number: 24823330.6
(22) Date of filing: 10.06.2024
(51) Int. Cl.: F16H 1/06, B62B 3/00, B62D 7/14, F16H 1/12

(54) **DRIVE WHEEL AND CART**

(30) Priority: 16.06.2023 JP 2023098936
(71) Applicant: NSK LTD., Tokyo 141-8560 (JP)
(72) Inventor: FUJIOKA, Ko, Fujisawa-shi, Kanagawa 251-8501 (JP)
(74) Representative: SSM Sandmair
(86) International application number: PCT/JP2024/020992
(87) International publication number: WO 2024/257714

(57) **Abstract**

It is possible to simplify the basic configuration and reduce the manufacturing cost while including the differential omnidirectional movement mechanism. A drive wheel includes a first drive mechanism 22A having a first drive shaft 22Ac, a second drive mechanism 22B having a second drive shaft 22Bc, a first input shaft 25A and a second input shaft 25B that are coaxial with each other, a first output shaft 40A and a second output shaft 40B, a first transmission gear mechanism 13A that transmits a rotational force of the first drive shaft to the first output shaft via the first input shaft, a second transmission gear mechanism 13B that transmits a rotational force of the second drive shaft to the second output shaft via the second input shaft, an axle 37 to which a wheel 15 is fixed, a first conversion gear mechanism 14A that transmits a rotational force of the first output shaft to the axle, a second conversion gear mechanism 14B that transmits a rotational force of the second output shaft to the axle, and a turning shaft 35 that turns the wheel via the axle, wherein the second transmission gear mechanism includes a gear that is fixed to the second input shaft and play-fitted around the first input shaft.

## Description

### Field

The present invention relates to a drive wheel and a carriage.

### Background

Patent Literature 1 discloses a drive wheel and a carriage using the drive wheel. The drive wheel includes a first input shaft and a second input shaft that are coaxially disposed, a first output shaft and a second output shaft that are arranged on different axes, a first spur gear mechanism that transmits a rotational force of the first input shaft to the first output shaft, a second spur gear mechanism that transmits a rotational force of the second input shaft to the second output shaft, a wheel connected to an axle, a turning shaft that turnably supports the wheel via the axle, a first power conversion mechanism that transmits a rotational force of the first output shaft to one end portion of the axle, and a second power conversion mechanism that transmits a rotational force of the second output shaft to the other end portion of the axle.

### Citation List

### Patent Literature

Patent Literature 1: Japanese Patent Application Laid-open No. 2020-024033

### Summary

### Technical Problem

The drive wheel described in Patent Literature 1 includes a differential omnidirectional movement mechanism. Then, it is desirable to simplify the basic configuration as much as possible while including such a differential omnidirectional movement mechanism. In the drive wheel described in Patent Literature 1, the first input shaft, the second input shaft having a cylindrical shape, and the turning shaft having a cylindrical shape overlap each other in a three-layer structure. Therefore, in order to smoothly operate each shaft, dimensional tolerance of each component needs to be strictly controlled, and further, since each component is complicated, it takes time and effort to assemble. For this reason, there is a concern that the manufacturing cost of the drive wheel described in Patent Literature 1 increases.

The present disclosure has been made in view of the above problems, and an object of the present disclosure is to provide a drive wheel and a carriage that can simplify a basic configuration and reduce manufacturing cost while including a differential omnidirectional movement mechanism.

### Solution to Problem

A drive wheel according to an aspect of the present disclosure includes: a first drive mechanism having a first drive shaft; a second drive mechanism having a second drive shaft; a first input shaft and a second input shaft that are coaxial with each other; an output shaft; a first transmission mechanism that transmits a rotational force of the first drive shaft to the output shaft via the first input shaft; a second transmission mechanism that transmits a rotational force of the second drive shaft to the output shaft via the second input shaft; a rotatable axle to which a wheel is fixed; a power conversion mechanism that transmits a rotational force of the output shaft to the axle; and a turning shaft that turnably supports the wheel via the axle, wherein the second transmission mechanism includes a gear that is fixed to the second input shaft and play-fitted around the first input shaft.

In a preferred aspect, the first transmission mechanism includes a first transmission drive gear fixed to the first drive shaft, a first transmission main-driven gear fixed to the first input shaft and meshing with the first transmission drive gear, and a first transmission sub-driven gear fixed to the first input shaft and configured to transmit a rotational force to the output shaft, and wherein the second transmission mechanism includes a second transmission drive gear fixed to the second drive shaft, a second transmission main-driven gear fixed to the second input shaft and meshing with the second transmission drive gear, and a second transmission sub-driven gear fixed to the second input shaft integrally with the second transmission main-driven gear and configured to transmit a rotational force to the output shaft.

In a preferred aspect, the output shaft includes a first output shaft and a second output shaft on different axes, and wherein the first transmission mechanism transmits a rotational force of the first input shaft to the first output shaft, wherein the second transmission mechanism transmits a rotational force of the second input shaft to the second output shaft, and wherein the power conversion mechanism includes a first power conversion mechanism that transmits a rotational force of the first output shaft to one end portion of the axle and a second power conversion mechanism that transmits a rotational force of the second output shaft to the other end portion of the axle.

In a preferred aspect, the first drive mechanism includes a first drive unit having the first drive shaft as an output shaft, and wherein the second drive mechanism includes a second drive unit having the second drive shaft as an output shaft.

In a preferred aspect, the first drive mechanism applies a rotational force to the first drive shaft via a first belt mechanism, and wherein the second drive mechanism applies a rotational force to the second drive shaft via a second belt mechanism.

In a preferred aspect, an angle detection shaft that is disposed coaxially with the first input shaft and the second input shaft and fixed to the turning shaft and to which an angle detector is connected.

In a preferred aspect, in the first transmission mechanism, the first transmission main-driven gear has a pitch circle diameter smaller than that of the first transmission sub-driven gear, and wherein, in the second transmission mechanism, the second transmission main-driven gear has a pitch circle diameter smaller than that of the second transmission sub-driven gear.

In a preferred aspect, the output shaft is single and a first transmission output gear and a second transmission output gear are fixed coaxially with the output shaft, and wherein the first transmission mechanism has a rotation reversing gear with which the first transmission sub-driven gear meshes and the rotation reversing gear meshes with the first transmission output gear, and wherein, in the second transmission mechanism, the second transmission sub-driven gear meshes with the second transmission output gear.

In a preferred aspect, the output shaft includes a first output shaft and a second output shaft on different axes, and wherein the first transmission mechanism integrally connects the first input shaft and the first output shaft, and wherein the power conversion mechanism includes a first power conversion mechanism that transmits a rotational force of the first output shaft to a predetermined portion of the axle and a second power conversion mechanism that transmits a rotational force of the second output shaft to the predetermined portion of the axle.

In a preferred aspect, the first drive shaft of the first drive mechanism is integrally connected to the first input shaft, and wherein a gear of the second transmission mechanism is fixed to the second drive shaft of the second drive mechanism.

In a preferred aspect, a rotation axis of the wheel aligned with a vertical direction and intersecting an axis of the axle is disposed to be shifted in a horizontal direction orthogonal to the axis of the axle with respect to an axis of the turning shaft.

A carriage according to an aspect of the present disclosure includes: a drive wheel; and a carriage main body to which the drive wheel is attached, wherein the drive wheel includes: a first drive mechanism having a first drive shaft; a second drive mechanism having a second drive shaft; a first input shaft and a second input shaft that are coaxial with each other; an output shaft; a first transmission mechanism that transmits a rotational force of the first drive shaft to the output shaft via the first input shaft; a second transmission mechanism that transmits a rotational force of the second drive shaft to the output shaft via the second input shaft; a rotatable axle to which a wheel is fixed; a power conversion mechanism that transmits a rotational force of the output shaft to the axle; and a turning shaft that turnably supports the wheel via the axle, and wherein the second transmission mechanism includes a gear that is fixed to the second input shaft and play-fitted around the first input shaft.

### Advantageous Effects of Invention

According to the present disclosure, it is possible to simplify the basic configuration and reduce the manufacturing cost while including the differential omnidirectional movement mechanism.

### Brief Description of Drawings

FIG. 1 is a perspective view illustrating a basic configuration of a drive wheel according to a first embodiment.
FIG. 2 is a right side view illustrating the basic configuration of the drive wheel according to the first embodiment.
FIG. 3 is a cross-sectional view illustrating a drive system of the drive wheel of the first embodiment.
FIG. 4 is a cross-sectional view illustrating the drive system of the drive wheel of the first embodiment.
FIG. 5 is a plan view illustrating the drive system of the drive wheel of the first embodiment.
FIG. 6 is a perspective view illustrating the drive system of the drive wheel of the first embodiment.
FIG. 7 is a schematic diagram illustrating a driving force transmission path of the drive wheel of the first embodiment.
FIG. 8 is a perspective view illustrating a basic configuration of a drive wheel according to a second embodiment.
FIG. 9 is a bottom view illustrating the basic configuration of the drive wheel according to the second embodiment.
FIG. 10 is a cross-sectional view illustrating a drive system of the drive wheel of the second embodiment.
FIG. 11 is a schematic diagram illustrating a driving force transmission path of the drive wheel of the second embodiment.
FIG. 12 is a cross-sectional view illustrating a basic configuration of a drive wheel of a third embodiment.
FIG. 13 is a schematic diagram illustrating a driving force transmission path of the drive wheel of the third embodiment.
FIG. 14 is a right side view illustrating a drive system of a drive wheel of a fourth embodiment.
FIG. 15 is a cross-sectional view illustrating the drive system of the drive wheel of the fourth embodiment.
FIG. 16 is a perspective view illustrating the drive system of the drive wheel of the fourth embodiment.
FIG. 17 is a schematic diagram illustrating a driving force transmission path of the drive wheel of the fourth embodiment.
FIG. 18 is a perspective view illustrating a basic configuration of a drive wheel of a fifth embodiment.
FIG. 19 is a right side view illustrating a drive system of the drive wheel of the fifth embodiment.
FIG. 20 is a perspective view illustrating the drive system of the drive wheel of the fifth embodiment.
FIG. 21 is a schematic diagram illustrating a driving force transmission path of the drive wheel of the fifth embodiment.
FIG. 22 is a perspective view illustrating a basic configuration of a drive wheel of a sixth embodiment.
FIG. 23 is a cross-sectional view illustrating a drive system of the drive wheel of the sixth embodiment.
FIG. 24 is a perspective view illustrating the drive system of the drive wheel of the sixth embodiment.
FIG. 25 is a schematic diagram illustrating a driving force transmission path of the drive wheel of the sixth embodiment.
FIG. 26 is a schematic diagram illustrating a configuration example of a carriage according to an embodiment.

### Description of Embodiments

Hereinafter, preferred embodiments of a drive wheel and a carriage according to the present disclosure will be described in detail with reference to the drawings. The present invention is not limited by the embodiments, and in a case where there are a plurality of embodiments, the present invention includes a combination of the embodiments. In addition, the constituent elements in the embodiment include those that can be easily assumed by those skilled in the art, those that are substantially the same, and those in a so-called equivalent range.

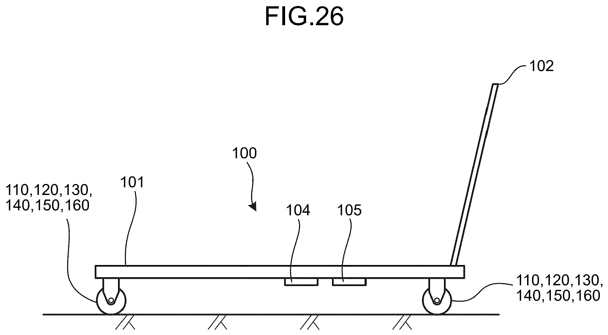

FIG. 26 is a schematic diagram illustrating a configuration example of a carriage according to an embodiment.

The carriage 100 includes a carriage main body 101, a handle portion 102, four drive wheels 110 (120, 130, 140, 150, and 160), a power supply unit 104, and a control device 105.

The carriage main body 101 is, for example, a flat plate material, and has a rectangular shape in plan view. The handle portion 102 is fixed to one side of the carriage main body 101 in a longitudinal direction. Four drive wheels 110 are mounted on the back surface side of the carriage main body 101 at four corners. The four drive wheels 110 are rotatable and steerable. In addition, the power supply unit 104 and the control device 105 are mounted on the back surface of the carriage main body 101 between the front and rear drive wheels 110. The control device 105 includes a computer system. The computer system includes a processor such as a CPU and a memory such as a ROM or a RAM. Therefore, in the carriage 100, the control device 105 controls the drive wheel 110.

Since the carriage main body 101 has a flat surface, a conveyance object can be placed on the flat surface. That is, the carriage 100 can be configured as an automatic guided vehicle (AGV). In addition, the carriage 100 can be configured as a traveling apparatus by arranging equipment along the flat surface of the carriage main body 101. Examples of the apparatus include various devices such as a hand lifter, a forklift, a picking robot, and medical equipment.

The number and arrangement of the drive wheels 110 of the carriage 100 and the apparatus are not limited to those described above. For example, in the carriage 100 and the apparatus, in the form of the above-described four wheels, a pair of drive wheels 110 may be attached to the rear side of the carriage 100, and a pair of driven wheels may be attached to the front side of the carriage 100. Although not clearly illustrated in the drawing, in the carriage 100 and the apparatus, in the form of three or more wheels, the drive wheel 110 may be one, and all the other wheels may be driven wheels. Although not clearly illustrated in the drawing, in the carriage 100 and the apparatus, in the form of three or more wheels, all the wheels may be the drive wheels 110 without having the driven wheels. That is, in the carriage 100 and the apparatus, in the form of three or more wheels, the drive wheel 110 only has to be at least one.

### (First Embodiment of Drive Wheel)

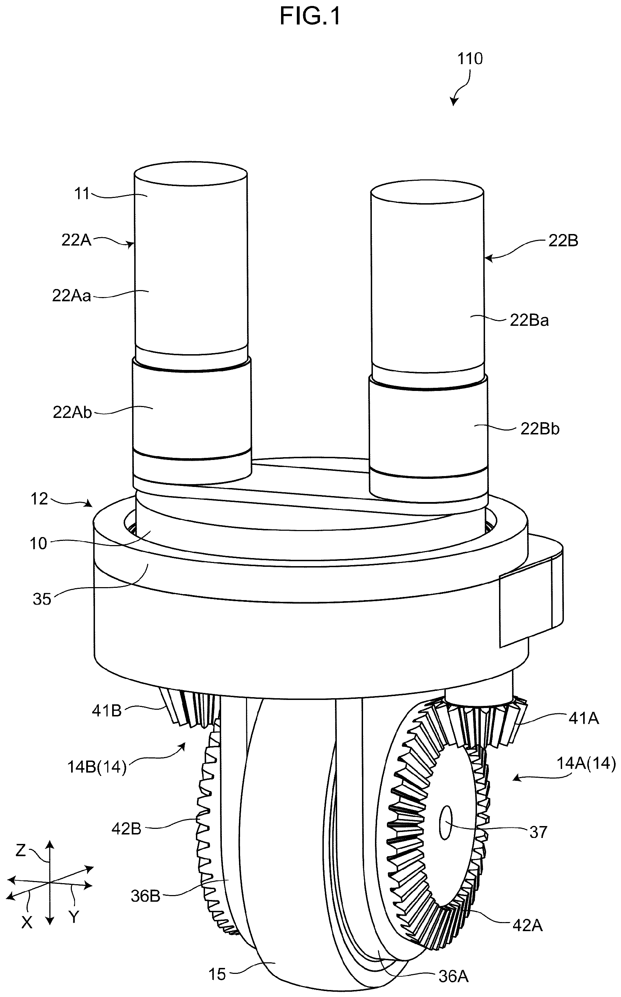

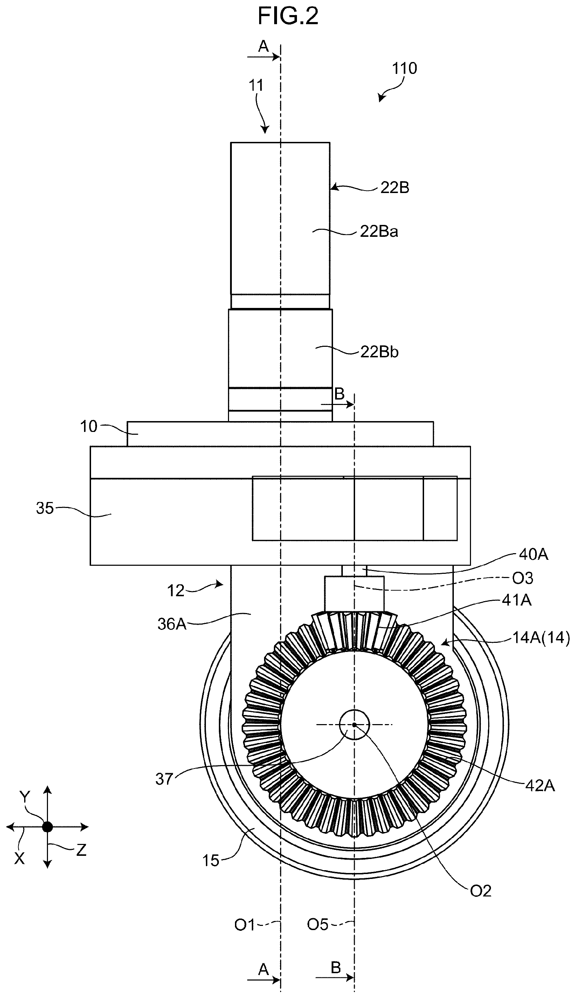

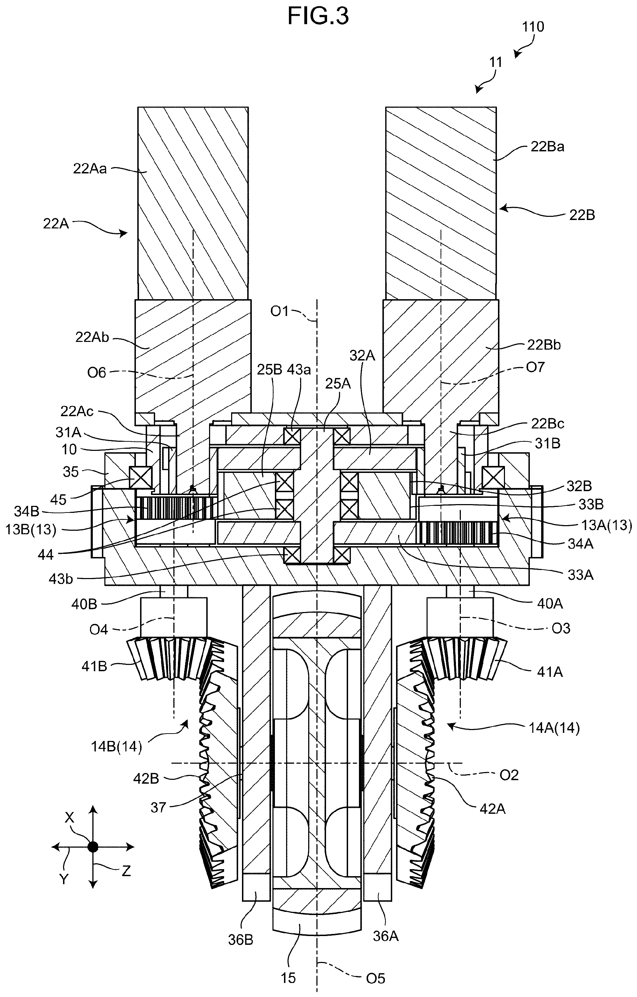

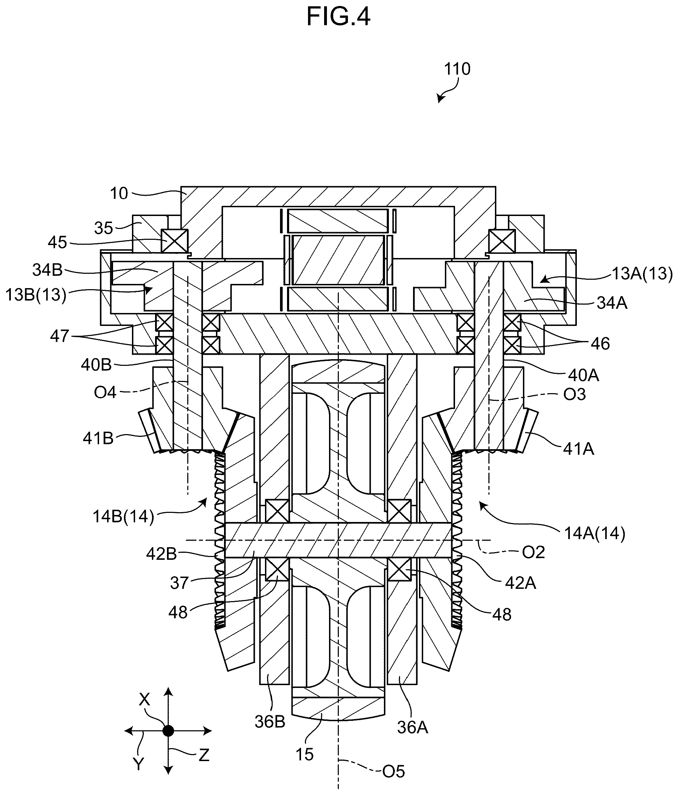

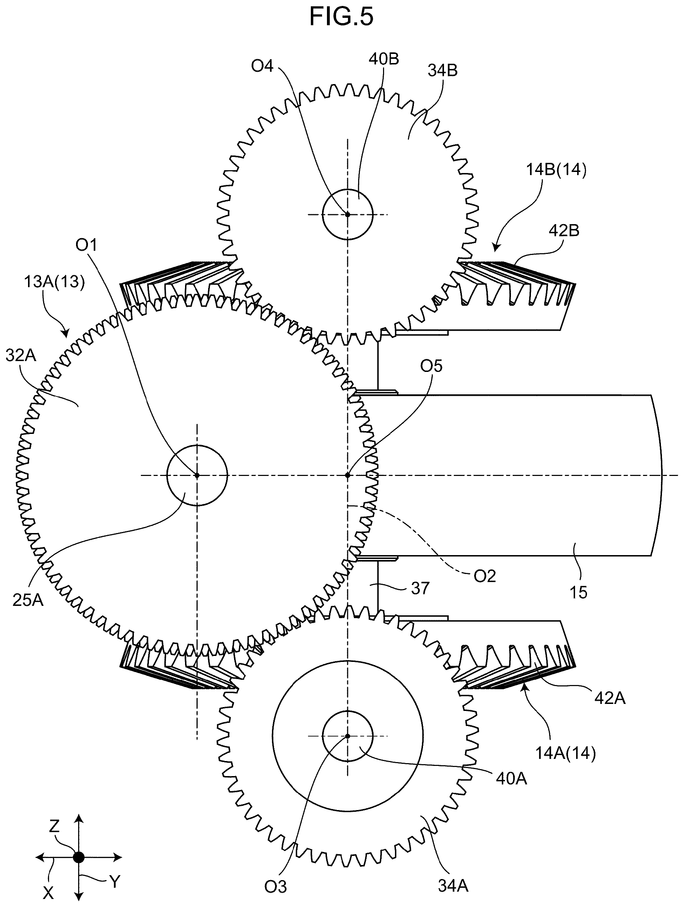

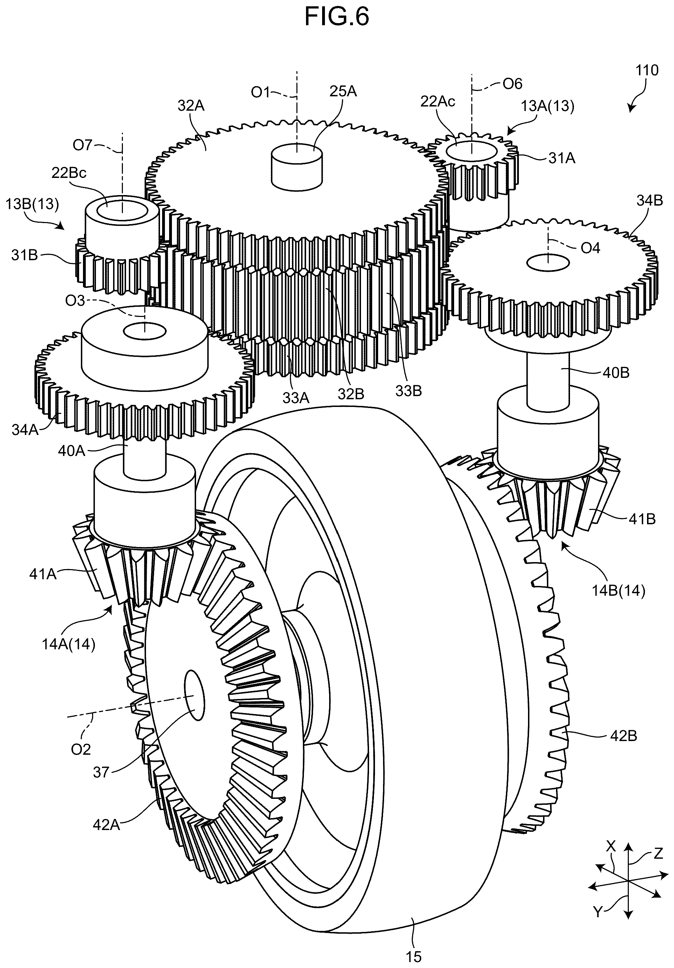

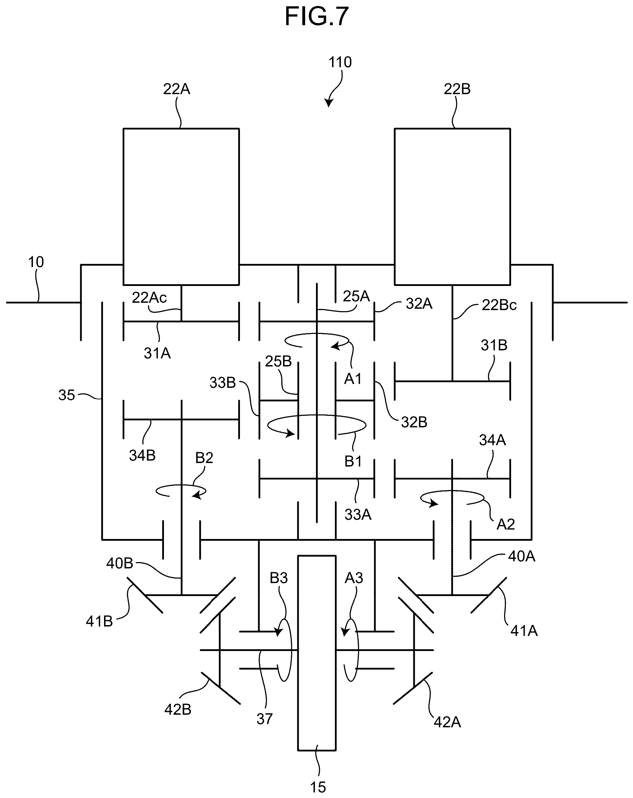

Hereinafter, the drive wheel 110 will be described in detail. FIG. 1 is a perspective view illustrating a basic configuration of a drive wheel according to a first embodiment. FIG. 2 is a right side view illustrating the basic configuration of the drive wheel according to the first embodiment. FIG. 3 is a cross-sectional view (cross-sectional view taken along line A-A in FIG. 2) illustrating a drive system of the drive wheel of the first embodiment. FIG. 4 is a cross-sectional view (cross-sectional view taken along line B-B in FIG. 2) illustrating the drive system of the drive wheel of the first embodiment. FIG. 5 is a plan view illustrating the drive system of the drive wheel of the first embodiment. FIG. 6 is a perspective view illustrating the drive system of the drive wheel of the first embodiment. FIG. 7 is a schematic diagram illustrating a driving force transmission path of the drive wheel of the first embodiment.

In the following description, among a first direction, a second direction, and a third direction intersecting each other, the first direction is referred to as a "front-rear direction X", the second direction is referred to as a "width direction Y", and the third direction is referred to as an "up-down direction Z". The front-rear direction X, the width direction Y, and the up-down direction Z are orthogonal to each other. The front-rear direction X typically corresponds to a direction along a direction in which the drive wheel 110 travels straight.

The drive wheel 110 has a main body 10 fixed to the carriage main body 101 of the carriage 100 as described above, and the drive mechanism 11, a turning unit 12, a transmission mechanism 13, a power conversion mechanism 14, and a wheel 15 are provided on the basis of the main body 10.

The main body 10 is formed in a plate shape with plate surfaces facing upward and downward (see FIGS. 3 and 4). The drive mechanism 11 inputs a rotational force and is mainly provided above the main body 10. The turning unit 12 is disposed mainly below the main body 10. The transmission mechanism 13 transmits the rotational force input by the drive mechanism 11. The power conversion mechanism 14 transmits the rotational force of the transmission mechanism 13 to the wheel 15. The wheel 15 is a single wheel, is rotatable with the rotational force input via the drive mechanism 11, the transmission mechanism 13, and the power conversion mechanism 14, and is steerable by the turning unit 12.

The drive mechanism 11 includes a first drive mechanism 22A and a second drive mechanism 22B.

The first drive mechanism 22A includes a first drive unit 22Aa, a first speed reducer 22Ab, and a first drive shaft 22Ac. The first drive unit 22Aa includes a motor. The first speed reducer 22Ab decelerates the speed of rotation output from the first drive unit 22Aa, and is integrally connected to the first drive unit 22Aa. The first drive shaft 22Ac rotates with the output of the first speed reducer 22Ab. In the drive wheel 110 of the embodiment, the first drive shaft 22Ac is configured as a drive unit integrated with the first drive unit 22Aa and the first speed reducer 22Ab. The first drive mechanism 22A is attached to the main body 10 such that an axis O6 (see FIG. 3) of the first drive shaft 22Ac extends in the up-down direction Z.

The second drive mechanism 22B includes a second drive unit 22Ba, a second speed reducer 22Bb, and a second drive shaft 22Bc. The second drive unit 22Ba includes a motor. The second speed reducer 22Bb decelerates the speed of rotation output from the second drive unit 22Ba, and is integrally connected to the second drive unit 22Ba. The second drive shaft 22Bc rotates with the output of the second speed reducer 22Bb. In the drive wheel 110 of the embodiment, the second drive shaft 22Bc is configured as a drive unit integrated with the second drive unit 22Ba and the second speed reducer 22Bb. The second drive mechanism 22B is attached to the main body 10 such that an axis O7 (see FIG. 3) of the second drive shaft 22Bc extends in the up-down direction Z.

The turning unit 12 includes a turning shaft 35, a first support member 36A, and a second support member 36B. The turning shaft 35 is rotatably supported via a bearing 45 (see FIGS. 3 and 4) provided on the outer periphery of the main body 10 with the center of a disk shape as an axis O1. As a result, the turning shaft 35 is supported to be relatively rotatable about the axis O1 with respect to the main body 10.

A first input shaft 25A is disposed in the turning shaft 35 to pass therethrough in the up-down direction Z coaxially with the axis O1, and the turning shaft 35 rotatably supports the first input shaft 25A via a bearing 43b (see FIG. 3). The first input shaft 25A is supported to be rotatable with respect to the main body 10 via a bearing 43a (see FIG. 3) coaxially with the axis 01. Therefore, the first input shaft 25A is supported to be relatively rotatable with respect to the turning shaft 35 about the axis O1, and is also supported to be relatively rotatable with respect to the main body 10 about the axis O1. That is, the turning shaft 35 is provided to be rotatable with respect to the main body 10 regardless of the rotation of the first input shaft 25A. For this reason, in the drive wheel 110 of the embodiment, it is possible to input the rotational force to the first input shaft 25A on the axis O1 which is a turning axis of the wheel 15.

A second input shaft 25B is disposed in the turning shaft 35 in the up-down direction Z. The first input shaft 25A is inserted into the second input shaft 25B, and the second input shaft 25B is disposed to be rotatable on an outer side of the first input shaft 25A via a bearing 44 (see FIG. 3). Therefore, via the first input shaft 25A, the second input shaft 25B is supported to be relatively rotatable with respect to the turning shaft 35 about the axis O1, and is also supported to be relatively rotatable with respect to the main body 10 about the axis O1. That is, the turning shaft 35 is provided to be rotatable with respect to the main body 10 regardless of the rotation of the second input shaft 25B. For this reason, in the drive wheel 110 of the embodiment, it is possible to input the rotational force to the second input shaft 25B on the axis O1 which is a turning axis of the wheel 15. With such a configuration, the first input shaft 25A, the second input shaft 25B, and the turning shaft 35 are rotatably disposed coaxially along the axis O1.

The turning shaft 35 is provided such that the first support member 36A and the second support member 36B extend downward on both sides in the width direction Y of the wheel 15 at a lower portion thereof. The wheel 15 is integrally provided with an axle 37 extending in the width direction Y along an axis O2 orthogonal to a direction in which the axis O1 extends (up-down direction Z). In the axle 37, along the axis O2, one end portion is rotatably supported with respect to the first support member 36A via a bearing 48 (see FIG. 4), and the other end portion is rotatably supported with respect to the second support member 36B via a bearing 48.

A first output shaft 40A is disposed in the turning shaft 35 to pass therethrough in the up-down direction Z in parallel with the axis O1, and the turning shaft 35 rotatably supports the first output shaft 40A via a bearing 46 (see FIG. 4). Therefore, the first output shaft 40A is supported to be relatively rotatable with respect to the turning shaft 35 about an axis O3 parallel to the axis O1.

A second output shaft 40B is disposed in the turning shaft 35 to pass therethrough in the up-down direction Z in parallel with the axis O1, and the turning shaft 35 rotatably supports the second output shaft 40B via a bearing 47 (see FIG. 4). Therefore, the second output shaft 40B is supported to be relatively rotatable with respect to the turning shaft 35 about an axis O4 parallel to the axis O1.

As illustrated in FIGS. 4 to 6, the transmission mechanism 13 has a first transmission gear mechanism (first transmission mechanism) 13A and a second transmission gear mechanism (second transmission mechanism) 13B.

The first transmission gear mechanism 13A transmits the rotational force of the first drive shaft 22Ac to the first output shaft 40A via the first input shaft 25A. The first transmission gear mechanism 13A includes a first transmission drive gear 31A, a first transmission main-driven gear 32A, a first transmission sub-driven gear 33A, and a first transmission output gear 34A. In the drive wheel 110 of the embodiment, the first transmission drive gear 31A, the first transmission main-driven gear 32A, the first transmission sub-driven gear 33A, and the first transmission output gear 34A are spur gears.

In the first transmission gear mechanism 13A, the first transmission drive gear 31A is fixed to the first drive shaft 22Ac of the first drive mechanism 22A. Therefore, the first transmission drive gear 31A rotates about an axis O6 of the first drive shaft 22Ac with the rotational force generated by the first drive mechanism 22A. The first transmission main-driven gear 32A and the first transmission sub-driven gear 33A are fixed to the first input shaft 25A. Therefore, the first transmission main-driven gear 32A and the first transmission sub-driven gear 33A rotate about the axis O1 of the first input shaft 25A. The first transmission output gear 34A is fixed to the first output shaft 40A. Therefore, the first transmission output gear 34A rotates about the axis O3 of the first output shaft 40A. The first transmission main-driven gear 32A meshes with the first transmission drive gear 31A. The first transmission output gear 34A meshes with the first transmission sub-driven gear 33A.

Therefore, the first transmission gear mechanism 13A transmits the rotational force of the first drive mechanism 22A from the first transmission drive gear 31A to the first transmission main-driven gear 32A and applies the rotational force to the first input shaft 25A, and further transmits the rotational force of the first input shaft 25A from the first transmission sub-driven gear 33A to the first transmission output gear 34A and applies the rotational force to the first output shaft 40A.

The second transmission gear mechanism 13B transmits the rotational force of the second drive shaft 22Bc to the second output shaft 40B via the second input shaft 25B. The second transmission gear mechanism 13B includes a second transmission drive gear 31B, a second transmission main-driven gear 32B, a second transmission sub-driven gear 33B, and a second transmission output gear 34B. In the drive wheel 110 of the embodiment, the second transmission drive gear 31B, the second transmission main-driven gear 32B, the second transmission sub-driven gear 33B, and the second transmission output gear 34B are spur gears.

In the second transmission gear mechanism 13B, the second transmission drive gear 31B is fixed to the second drive shaft 22Bc of the second drive mechanism 22B. Therefore, the second transmission drive gear 31B rotates about the axis O7 of the second drive shaft 22Bc with the rotational force generated by the second drive mechanism 22B. The second transmission main-driven gear 32B and the second transmission sub-driven gear 33B are fixed to the second input shaft 25B. Therefore, the second transmission main-driven gear 32B and the second transmission sub-driven gear 33B become a play-fitting structure fitted with play around the outer side of the first input shaft 25A via the second input shaft 25B, and rotate about the axis O1 of the second input shaft 25B. The second transmission main-driven gear 32B and the second transmission sub-driven gear 33B are disposed between the first transmission main-driven gear 32A and the first transmission sub-driven gear 33A of the first transmission gear mechanism 13A. The second transmission output gear 34B is fixed to the second output shaft 40B. Therefore, the second transmission output gear 34B rotates about the axis O4 of the second output shaft 40B. The second transmission main-driven gear 32B meshes with the second transmission drive gear 31B. The second transmission output gear 34B meshes with the second transmission sub-driven gear 33B. Therefore, the second transmission gear mechanism 13B transmits the rotational force of the second drive mechanism 22B from the second transmission drive gear 31B to the second transmission main-driven gear 32B and applies the rotational force to the second input shaft 25B, and further transmits the rotational force of the second input shaft 25B from the second transmission sub-driven gear 33B to the second transmission output gear 34B and applies the rotational force to the second output shaft 40B.

In the transmission mechanism 13, the first transmission drive gear 31A of the first transmission gear mechanism 13A and the second transmission drive gear 31B of the second transmission gear mechanism 13B have the same pitch circle diameter and the same number of teeth. In the transmission mechanism 13, the first transmission main-driven gear 32A and the first transmission sub-driven gear 33A of the first transmission gear mechanism 13A, and the second transmission main-driven gear 32B and the second transmission sub-driven gear 33B of the second transmission gear mechanism 13B have the same pitch circle diameter and the same number of teeth. In the transmission mechanism 13, the first transmission output gear 34A of the first transmission gear mechanism 13A and the second transmission output gear 34B of the second transmission gear mechanism 13B have the same pitch circle diameter and the same number of teeth.

As illustrated in FIGS. 1 to 6, the power conversion mechanism 14 has a first conversion gear mechanism (first power conversion mechanism) 14A and a second conversion gear mechanism (second power conversion mechanism) 14B.

The first conversion gear mechanism 14A transmits the rotational force of the first output shaft 40A to the axle 37. The first conversion gear mechanism 14A includes a first conversion drive gear 41A and a first conversion driven gear 42A. In the drive wheel 110 of the embodiment, the first conversion gear mechanism 14A and the first conversion driven gear 42A are bevel gears.

The first conversion drive gear 41A is fixed to a lower portion of the first output shaft 40A. Therefore, the first conversion drive gear 41A rotates about the axis O3 together with the first output shaft 40A. In addition, the first conversion driven gear 42A is fixed to one end portion of the axle 37. Therefore, the first conversion driven gear 42A rotates about the axis O2 together with the axle 37. Then, the first conversion drive gear 41A meshes with the first conversion driven gear 42A. Therefore, the first conversion gear mechanism 14A converts rotation about the axis O3 of the first output shaft 40A into rotation about the axis O2 of the axle 37.

The second conversion gear mechanism 14B transmits the rotational force of the second output shaft 40B to the axle 37. The second conversion gear mechanism 14B includes a second conversion drive gear 41B and a second conversion driven gear 42B. In the drive wheel 110 of the embodiment, the second conversion gear mechanism 14B and the second conversion driven gear 42B are bevel gears.

The second conversion drive gear 41B is fixed to a lower portion of the second output shaft 40B. Therefore, the second conversion drive gear 41B rotates about the axis O4 together with the second output shaft 40B. In addition, the second conversion driven gear 42B is fixed to the other end portion of the axle 37. Therefore, the second conversion driven gear 42B rotates about the axis O2 together with the axle 37. Then, the second conversion drive gear 41B meshes with the second conversion driven gear 42B. Therefore, the second conversion gear mechanism 14B converts rotation about the axis O4 of the second output shaft 40B into rotation about the axis O2 of the axle 37.

In addition, as illustrated in FIGS. 2 and 5, in the drive wheel 110 of the embodiment, a rotation axis O5 of the wheel 15 in a vertical direction intersecting the axis O2 of the axle 37 is disposed to be shifted (offset) in a horizontal direction (front-rear direction X) orthogonal to the axis O2 of the axle 37 with respect to the axis O1 of the turning shaft 35. In addition, in the drive wheel 110 of the embodiment, the axis O3 of the first output shaft 40A and the axis O4 of the second output shaft 40B are provided to overlap the axis O2 of the axle 37 in plan view.

In the drive wheel 110, it is possible to perform rotating and steering of the wheel 15 by rotating the first input shaft 25A and the second input shaft 25B by the drive mechanism 11. For example, the first input shaft 25A is rotated, the second input shaft 25B is rotated in a direction opposite to that of the first input shaft 25A, and the numbers of rotations (rotation speeds) to be transmitted to the first input shaft 25A and the second input shaft 25B are made the same, and thus it is possible to rotate the wheel 15 without steering. At this time, the numbers of rotations (rotation speeds) of the first input shaft 25A and the second input shaft 25B are made different from each other, and thus it is possible to steer the wheel 15 in a rotated or stopped state.

Here, the operation of the drive wheel 110 will be described. As illustrated in FIG. 7, in the drive wheel 110, when the first input shaft 25A is rotated in an A1 direction, the first transmission main-driven gear 32A and the first transmission sub-driven gear 33A rotate in the same direction, and the first transmission output gear 34A meshing with the first transmission sub-driven gear 33A rotates in an A2 direction opposite to the A1 direction. When the first transmission output gear 34A rotates in the A2 direction, the first conversion drive gear 41A integrally provided on the first transmission output gear 34A via the first output shaft 40A rotates in the same direction. Then, the first conversion driven gear 42A meshing with the first conversion drive gear 41A rotates in an A3 direction, and the axle 37 integrated with the first conversion driven gear 42A is rotated in the same direction. On the other hand, in the drive wheel 110, when the second input shaft 25B is rotated in a B1 direction opposite to the A1 direction, the second transmission main-driven gear 32B and the second transmission sub-driven gear 33B rotate in the same direction, and the second transmission output gear 34B meshing with the second transmission sub-driven gear 33B rotates in a B2 direction opposite to the B1 direction. When the second transmission output gear 34B rotates in the B2 direction, the second conversion drive gear 41B integrally provided on the second transmission output gear 34B via the second output shaft 40B rotates in the same direction. Then, the second conversion driven gear 42B meshing with the second conversion drive gear 41B rotates in a B3 direction, and the axle 37 integrated with the second conversion driven gear 42B is rotated in the same direction.

At this time, in the drive wheel 110, when the number of rotations of the second input shaft 25B is reduced with respect to the number of rotations of the first input shaft 25A, the numbers of rotations input to the second transmission main-driven gear 32B and the second transmission sub-driven gear 33B become lower than the numbers of rotations input to the first transmission main-driven gear 32A and the first transmission sub-driven gear 33A. Then, the turning shaft 35 rotates by a difference in the number of rotations, and turns and steers the wheel 15. In addition, in the drive wheel 110, when the rotation of the first input shaft 25A or the second input shaft 25B is stopped, the numbers of rotations input to the first transmission main-driven gear 32A and the first transmission sub-driven gear 33A or the numbers of rotations input to the second transmission main-driven gear 32B and the second transmission sub-driven gear 33B become 0, and the wheel 15 is turned and steered without being rotated.

The drive wheel 110 of the embodiment includes the first drive mechanism 22A having the first drive shaft 22Ac, the second drive mechanism 22B having the second drive shaft 22Bc, the first input shaft 25A and the second input shaft 25B that are coaxial with each other, the output shaft (first output shaft 40A and second output shaft 40B on different axes), the first transmission gear mechanism (first transmission mechanism) 13A that transmits the rotational force of the first drive shaft 22Ac to the output shaft via the first input shaft 25A, the second transmission gear mechanism (second transmission mechanism) 13B that transmits the rotational force of the second drive shaft 22Bc to the output shaft via the second input shaft 25B, the rotatable axle 37 to which the wheel 15 is fixed, the power conversion mechanism 14 (first conversion gear mechanism (first power conversion mechanism) 14A, second conversion gear mechanism (second power conversion mechanism) 14B) that transmits the rotational force of the output shaft to the axle 37, and the turning shaft 35 that turnably supports the wheel 15 via the axle 37. Further, in the drive wheel 110, the second transmission mechanism 13B includes the gear (second transmission main-driven gear 32B and second transmission sub-driven gear 33B) that is fixed to the second input shaft 25B and play-fitted to the first input shaft 25A.

The drive wheel 110 has a differential omnidirectional movement mechanism. That is, in the drive wheel 110, the rotational force of the first input shaft 25A is transmitted to the output shaft (first output shaft 40A) via the first transmission gear mechanism 13A, and the rotational force of the second input shaft 25B is transmitted to the output shaft (second output shaft 40B) via the second transmission gear mechanism 13B, transmitted from the output shaft (first output shaft 40A) to the axle 37 via the power conversion mechanism 14 (first conversion gear mechanism 14A), and transmitted from the output shaft (second output shaft 40B) to the axle 37 via the power conversion mechanism 14 (second conversion gear mechanism 14B). In the drive wheel 110, it is possible to switch between the rotation of the wheel 15 connected to the axle 37 and the steering of the wheel 15 by adjusting the numbers of rotations of the first input shaft 25A and the second input shaft 25B.

In particular, in the drive wheel 110, in the second transmission gear mechanism 13B, the gear (second transmission main-driven gear 32B and second transmission sub-driven gear 33B) is fixed to the second input shaft 25B and play-fitted to the first input shaft 25A. As a result, in the drive wheel 110 of the embodiment, it is possible to simplify the basic configuration by eliminating the conventional three-layer structure (for example, Patent Literature 1). In addition, in the drive wheel 110, it is easy to manage dimensional tolerance of each component for smooth operation of the gear, and it is possible to prevent each component from being complicatedly assembled and to facilitate assembly. For this reason, the manufacturing cost of the drive wheel 110 of the embodiment can be reduced.

In addition, in the drive wheel 110, the second transmission gear mechanism 13B includes the second transmission drive gear 31B fixed to the second drive shaft 22Bc, the second transmission main-driven gear 32B fixed to the second input shaft 25B and meshing with the second transmission drive gear 31B, and a second transmission sub-driven gear 33B fixed to the second input shaft 25B integrally with the second transmission main-driven gear 32B and configured to transmit the rotational force to the output shaft (second output shaft 40B). Furthermore, in the drive wheel 110, the first transmission gear mechanism 13A includes the first transmission drive gear 31A fixed to the first drive shaft 22Ac, the first transmission main-driven gear 32A fixed to the first input shaft 25A and meshing with the first transmission drive gear 31A, and a first transmission sub-driven gear 33A fixed to the first input shaft 25A and configured to transmit the rotational force to the output shaft (first output shaft 40A).

In the drive wheel 110, in the second transmission gear mechanism 13B, the second transmission main-driven gear 32B and the second transmission sub-driven gear 33B are integrally fixed to the second input shaft 25B. As a result, in the drive wheel 110 of the embodiment, it is possible to simplify the basic configuration. Moreover, according to the drive wheel 110, in the first transmission gear mechanism 13A, the first transmission main-driven gear 32A and the first transmission sub-driven gear 33A are integrally fixed to the first input shaft 25A. As a result, in the drive wheel 110 of the embodiment, it is possible to further simplify the basic configuration.

In addition, in the drive wheel 110, the output shaft includes the first output shaft 40A and the second output shaft 40B on different axes, the first transmission gear mechanism 13A transmits the rotational force of the first input shaft 25A to the first output shaft 40A, the second transmission gear mechanism 13B transmits the rotational force of the second input shaft 25B to the second output shaft 40B, and the power conversion mechanism 14 includes the first conversion gear mechanism (first power conversion mechanism) 14A that transmits the rotational force of the first output shaft 40A to one end portion of the axle 37 and the second conversion gear mechanism (second power conversion mechanism) 14B that transmits the rotational force of the second output shaft 40B to the other end portion of the axle 37.

According to the drive wheel 110, the rotational forces of the first output shaft 40A and the second output shaft 40B are transmitted to one end portion and the other end portion of the axle 37, respectively. Therefore, in the drive wheel 110, it is possible to increase the transmission capacity to the axle 37 while simplifying the basic configuration.

In addition, in the drive wheel 110, the first drive mechanism 22A is formed integrally with the first drive shaft 22Ac, and the second drive mechanism 22B is formed integrally with the second drive shaft 22Bc.

According to the drive wheel 110, since the first drive mechanism 22A is integrated with the first drive shaft 22Ac and the second drive mechanism 22B is integrated with the second drive shaft 22Bc, it is possible to simplify the basic configuration.

In addition, in the drive wheel 110, the rotation axis O5 of the wheel 15 aligned with a vertical direction and intersecting the axis O2 of the axle 37 is disposed to be shifted in the horizontal direction orthogonal to the axis O2 of the axle 37 with respect to the axis O1 of the turning shaft 35.

According to the drive wheel 110, when the wheel 15 is not driven, the wheel 15 can passively turn by an external force acting in the horizontal direction. That is, it is possible to automatically travel and automatically steer the carriage 100, and it is possible for the worker to manually travel and manually steer the carriage 100.

In addition, the carriage 100 of the embodiment includes the drive wheel 110 described above and the carriage main body 101 to which the drive wheel 110 is attached. For this reason, in the carriage 100, it is possible to simplify the basic structure.

### (Second Embodiment of Drive Wheel)

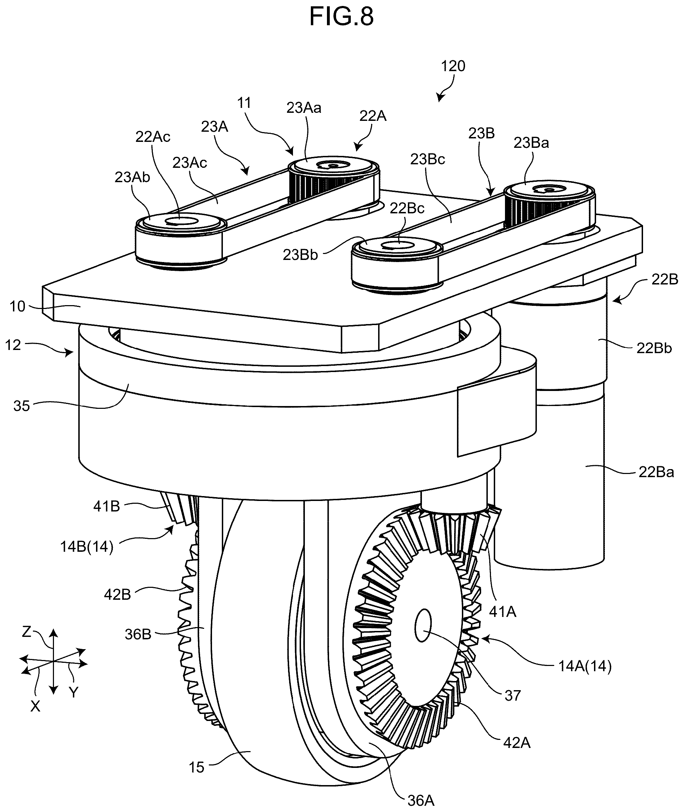

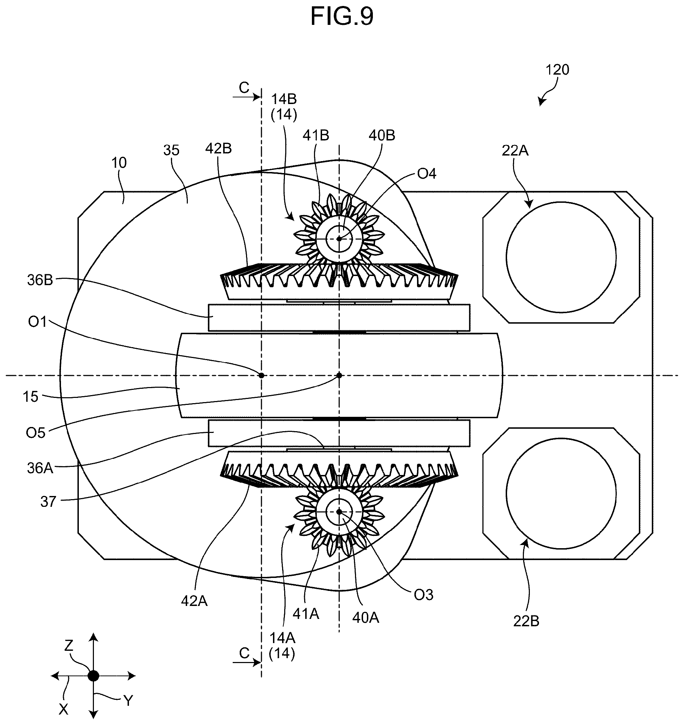

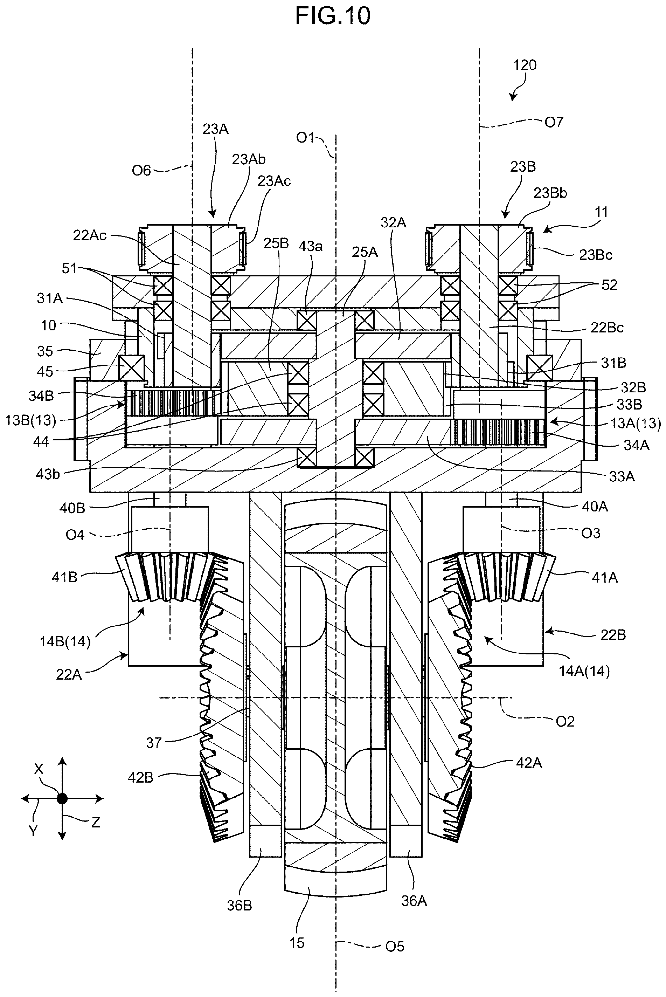

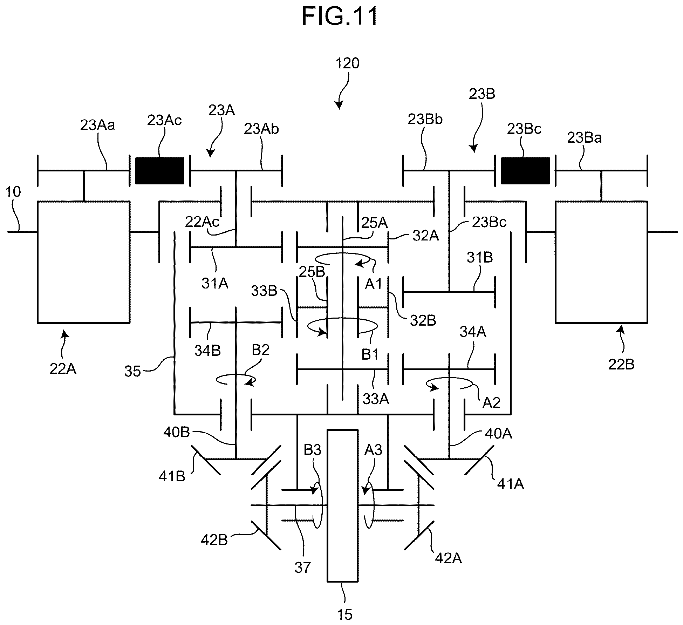

FIG. 8 is a perspective view illustrating a basic configuration of a drive wheel according to a second embodiment. FIG. 9 is a bottom view illustrating the basic configuration of the drive wheel according to the second embodiment. FIG. 10 is a cross-sectional view (cross-sectional view taken along line C-C in FIG. 9) illustrating a drive system of the drive wheel of the second embodiment. FIG. 11 is a schematic diagram illustrating a driving force transmission path of the drive wheel of the second embodiment.

A drive wheel 120 of the second embodiment is different from the drive wheel 110 of the first embodiment described above mainly in the configuration of the drive mechanism 11. In the following description of the drive wheel 120 of the second embodiment, the same reference numerals are given to the same portions as those of the drive wheel 110 described above, and the description thereof will be omitted.

The drive mechanism 11 includes a first drive mechanism 22A and a second drive mechanism 22B.

The first drive mechanism 22A includes a first drive unit 22Aa, a first speed reducer 22Ab, and a first drive shaft 22Ac. The first drive unit 22Aa and the first speed reducer 22Ab are integrally formed and fixed to a lower portion of the main body 10. The first drive mechanism 22A includes a first belt mechanism 23A and applies a rotational force to the first drive shaft 22Ac via the first belt mechanism 23A. The first belt mechanism 23A includes a first drive pulley 23Aa provided at an output portion of the first speed reducer 22Ab, a first driven pulley 23Ab fixed to the first drive shaft 22Ac, and a first drive belt 23Ac. The first drive shaft 22Ac is rotatably supported with respect to the main body 10 via a bearing 51 (see FIG. 10). Therefore, in the first belt mechanism 23A, the first drive pulley 23Aa rotates with the output of the first speed reducer 22Ab, the rotational force of the first drive pulley 23Aa is transmitted to the first driven pulley 23Ab via the first drive belt 23Ac, and the first drive shaft 22Ac rotates. In the present embodiment, the pulley ratio between the first drive pulley 23Aa and the first driven pulley 23Ab is set to 1:1.

The second drive mechanism 22B includes a second drive unit 22Ba, a second speed reducer 22Bb, and a second drive shaft 22Bc. The second drive unit 22Ba and the second speed reducer 22Bb are integrally formed and fixed to the lower portion of the main body 10. The second drive mechanism 22B includes a second belt mechanism 23B and applies a rotational force to the second drive shaft 22Bc via the second belt mechanism 23B. The second belt mechanism 23B includes a second drive pulley 23Ba provided at an output portion of the second speed reducer 22Bb, a second driven pulley 23Bb fixed to the second drive shaft 22Bc, and a second drive belt 23Bc. The second drive shaft 22Bc is rotatably supported with respect to the main body 10 via a bearing 52 (see FIG. 10). Therefore, in the second belt mechanism 23B, the second drive pulley 23Ba rotates with the output of the second speed reducer 22Bb, the rotational force of the second drive pulley 23Ba is transmitted to the second driven pulley 23Bb via the second drive belt 23Bc, and the second drive shaft 22Bc rotates. In the present embodiment, the pulley ratio between the second drive pulley 23Ba and the second driven pulley 23Bb is set to 1:1.

As illustrated in FIG. 11, the drive wheel 120 and the carriage 100 can be operated similarly to the drive wheel 110 and the carriage 100 of the first embodiment, and can obtain the same operation and effect as the drive wheel 110 and the carriage 100.

In particular, in the drive wheel 120, the first drive mechanism 22A applies a rotational force to the first drive shaft 22Ac via the first belt mechanism 23A, and the second drive mechanism 22B applies a rotational force to the second drive shaft 22Bc via the second belt mechanism 23B.

According to the drive wheel 120, by applying the first belt mechanism 23A and the second belt mechanism 23B, it is possible to give a degree of freedom to the arrangement of the first drive unit 22Aa, the first speed reducer 22Ab, the second drive unit 22Ba, and the second speed reducer 22Bb which are main constituent elements of the first drive mechanism 22A and the second drive mechanism 22B. Specifically, in the drive wheel 120, it is possible to arrange the main constituent elements of the first drive mechanism 22A and the second drive mechanism 22B together with other constituent elements (power conversion mechanism 14, wheel 15, turning shaft 35, axle 37) in a lower portion of the main body 10. As a result, the overall height of the drive wheel 120 can be made low. According to the drive wheel 120, in the first belt mechanism 23A and the second belt mechanism 23B, the pulley ratio between the first drive pulley 23Aa and the first driven pulley 23Ab and the pulley ratio between the second drive pulley 23Ba and the second driven pulley 23Bb are changed from 1:1 to another ratio, and thus it is possible to fulfill the role of the speed reduction mechanism.

In addition, the carriage 100 of the embodiment includes the drive wheel 120 described above and the carriage main body 101 to which the drive wheel 120 is attached. For this reason, in the carriage 100, it is possible to simplify the basic structure.

### (Third Embodiment of Drive Wheel)

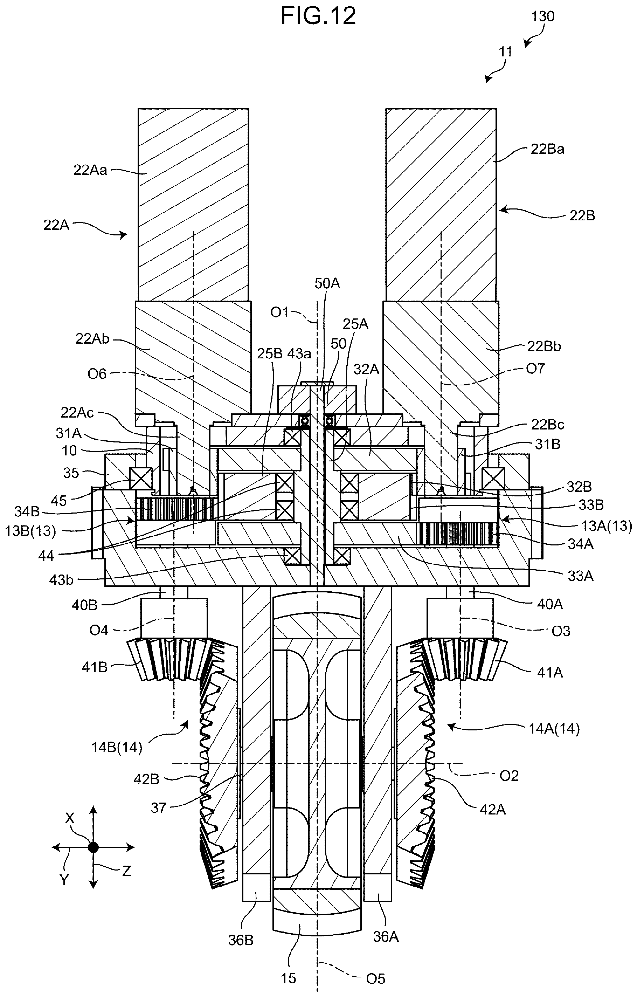

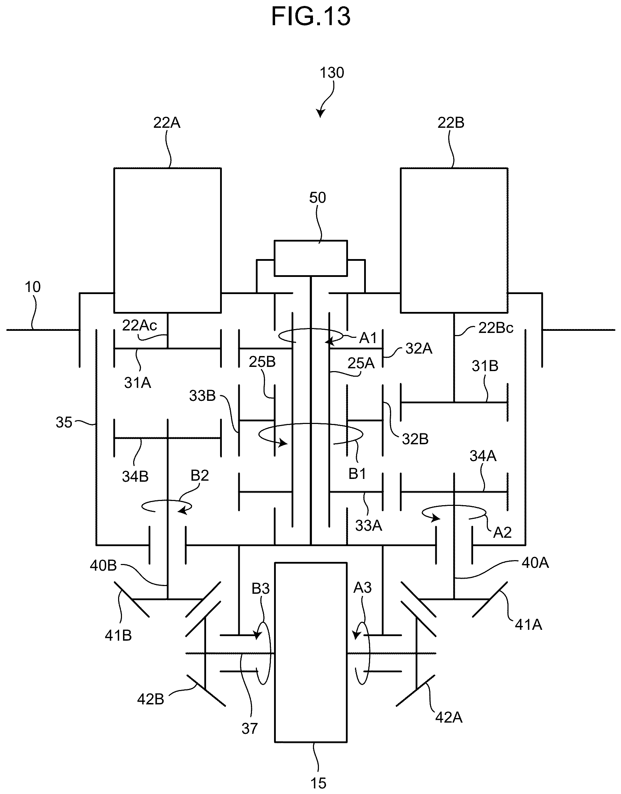

FIG. 12 is a cross-sectional view (corresponding to a cross-sectional position taken along line A-A in FIG. 2) illustrating a basic configuration of a drive wheel of a third embodiment. FIG. 13 is a schematic diagram illustrating a driving force transmission path of the drive wheel of the second embodiment.

A drive wheel 130 of the embodiment is different in that an angle detector 50 is applied to the drive wheel 110 described above. In the following description of the drive wheel 130 of the third embodiment, the same reference numerals are given to the same portions as those of the drive wheel 110 described above, and the description thereof will be omitted.

The drive wheel 130 has an angle detection shaft 50A disposed coaxially with the first input shaft 25A and the second input shaft 25B. The angle detection shaft 50A is rotatably inserted into the first input shaft 25A, a lower portion thereof is fixed to the turning shaft 35, and an upper portion thereof passes through the main body 10 and protrudes upward. Therefore, the angle detection shaft 50A is rotatable together with the turning shaft 35 regardless of the main body 10.

The angle detector 50 is fixed to the main body 10, and detects the rotation of the angle detection shaft 50A fixed to the turning shaft 35. Therefore, the angle detector 50 detects a relative rotation angle between the main body 10 and the turning shaft 35. In the drive wheel 130, the detection signal of the angle detector 50 is input to the control device 105 of the carriage (apparatus) 100. As a result, the control device 105 can control the turning of the drive wheel 130.

As illustrated in FIG. 13, the drive wheel 130 and the carriage 100 can be operated similarly to the drive wheel 110 and the carriage 100 of the first embodiment, and can obtain the same operation and effect as the drive wheel 110 and the carriage 100.

### (Fourth Embodiment of Drive Wheel)

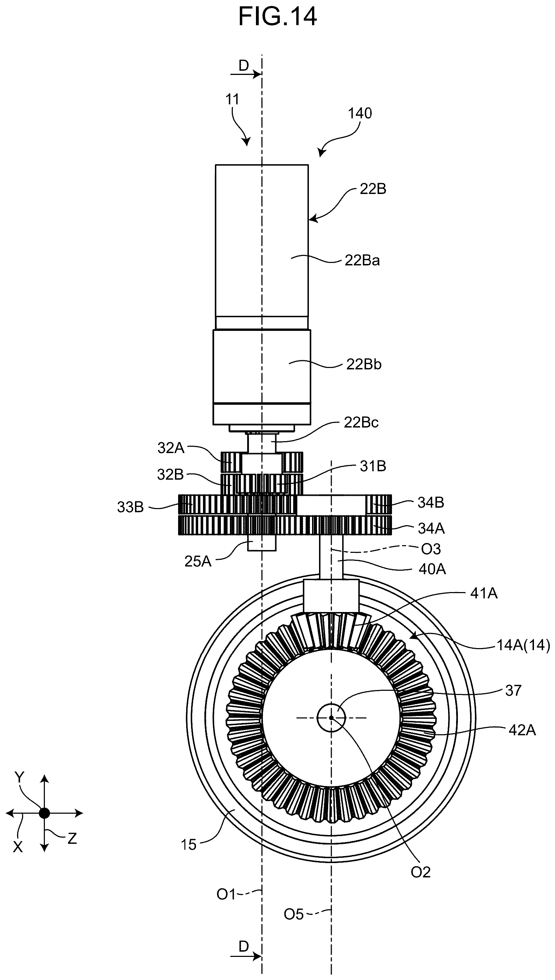

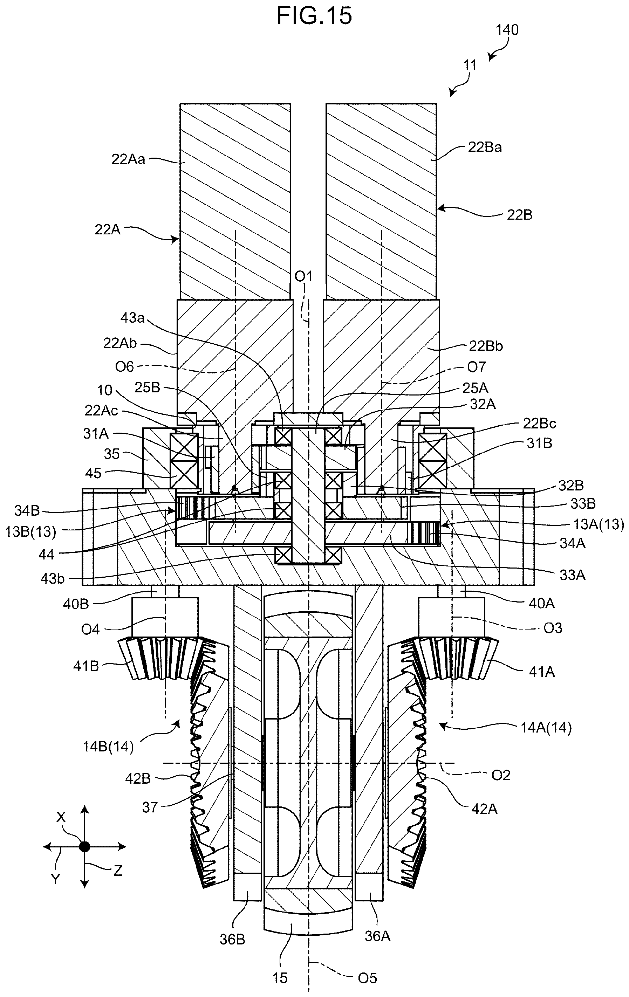

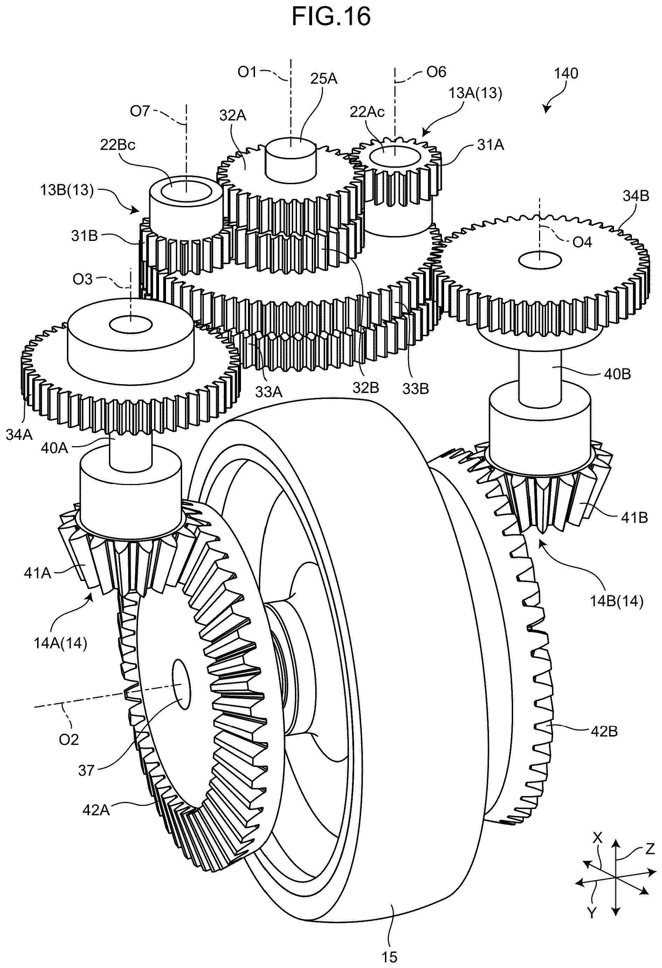

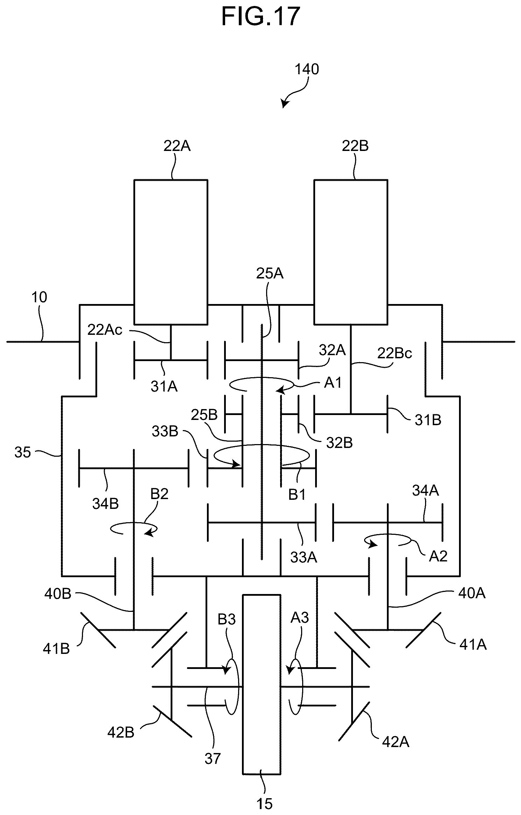

FIG. 14 is a right side view illustrating a drive system of a drive wheel of a fourth embodiment. FIG. 15 is a cross-sectional view (corresponding to a cross-sectional position taken along line A-A in FIG. 2) illustrating the drive system of the drive wheel of the fourth embodiment. FIG. 16 is a perspective view illustrating the drive system of the drive wheel of the fourth embodiment. FIG. 17 is a schematic diagram illustrating a driving force transmission path of the drive wheel of the fourth embodiment.

A drive wheel 140 of the embodiment is different from the drive wheel 110 described above in the configuration of the transmission mechanism 13. In the following description of the drive wheel 140 of the fourth embodiment, the same reference numerals are given to the same portions as those of the drive wheel 110 described above, and the description thereof will be omitted.

The transmission mechanism 13 has the first transmission gear mechanism (first transmission mechanism) 13A and the second transmission gear mechanism (second transmission mechanism) 13B.

The first transmission gear mechanism 13A transmits the rotational force of the first drive shaft 22Ac to the first output shaft 40A via the first input shaft 25A. The first transmission gear mechanism 13A includes a first transmission drive gear 31A, a first transmission main-driven gear 32A, a first transmission sub-driven gear 33A, and a first transmission output gear 34A.

In the first transmission gear mechanism 13A of the drive wheel 140, the first transmission main-driven gear 32A has a pitch circle diameter smaller than that of the first transmission sub-driven gear 33A. Therefore, the first transmission drive gear 31A meshing with the first transmission main-driven gear 32A is disposed closer to the axis O1 together with the first drive shaft 22Ac (first drive mechanism 22A) than that of the drive wheel 110.

The second transmission gear mechanism 13B transmits the rotational force of the second drive shaft 22Bc to the second output shaft 40B via the second input shaft 25B. The second transmission gear mechanism 13B includes a second transmission drive gear 31B, a second transmission main-driven gear 32B, a second transmission sub-driven gear 33B, and a second transmission output gear 34B.

In the second transmission gear mechanism 13B of the drive wheel 140, the second transmission main-driven gear 32B has a pitch circle diameter smaller than that of the second transmission sub-driven gear 33B. Therefore, the second transmission drive gear 31B meshing with the second transmission main-driven gear 32B is disposed closer to the axis O1 together with the second drive shaft 22Bc (second drive mechanism 22B) than that of the drive wheel 110.

In the drive wheel 140, in the first transmission gear mechanism 13A, the first transmission main-driven gear 32A has a pitch circle diameter smaller than that of the first transmission sub-driven gear 33A, and in the second transmission gear mechanism 13B, the second transmission main-driven gear 32B has a pitch circle diameter smaller than that of the second transmission sub-driven gear 33B.

According to the drive wheel 140, by reducing the pitch circle diameters of the first transmission main-driven gear 32A and the second transmission main-driven gear 32B, the bearing 44 having a relatively small diameter can be applied, and the manufacturing cost can be reduced. In addition, according to the drive wheel 140, the arrangement efficiency of the drive mechanism 11 can be improved by reducing the pitch circle diameter of the first transmission main-driven gear 32A and the second transmission main-driven gear 32B.

As illustrated in FIG. 17, the drive wheel 140 and the carriage 100 can be operated similarly to the drive wheel 110 and the carriage 100 of the first embodiment, and can obtain the same operation and effect as the drive wheel 110 and the carriage 100.

### (Fifth Embodiment of Drive Wheel)

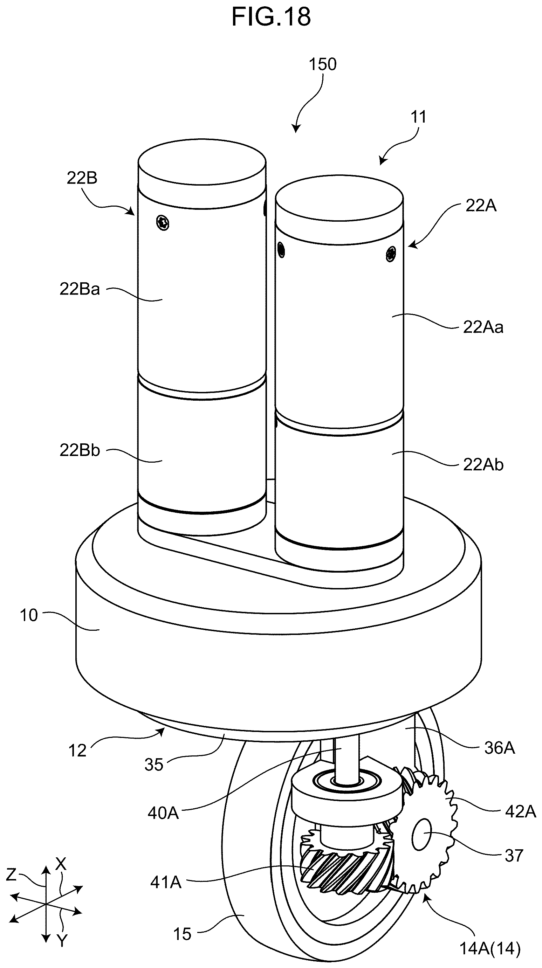

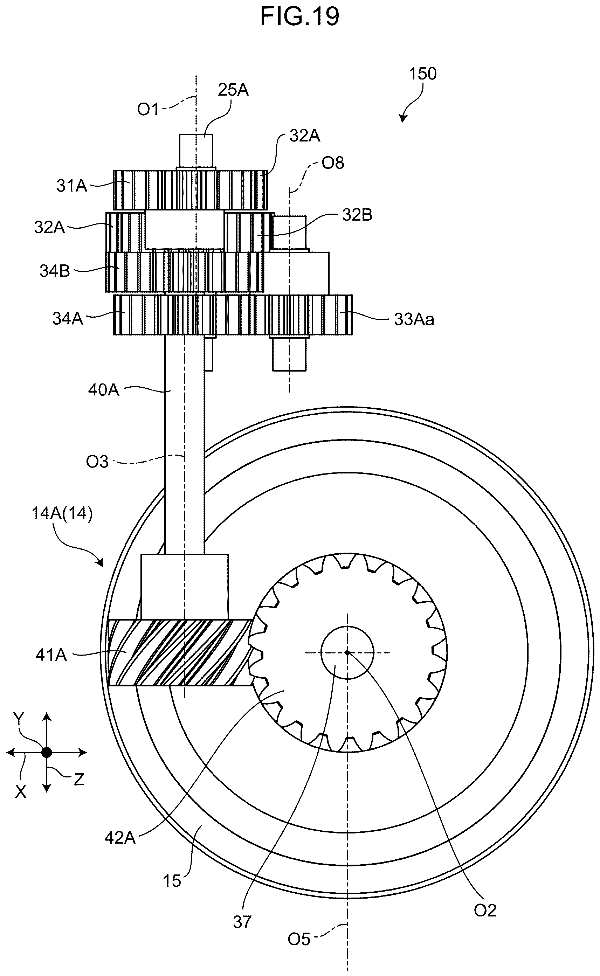

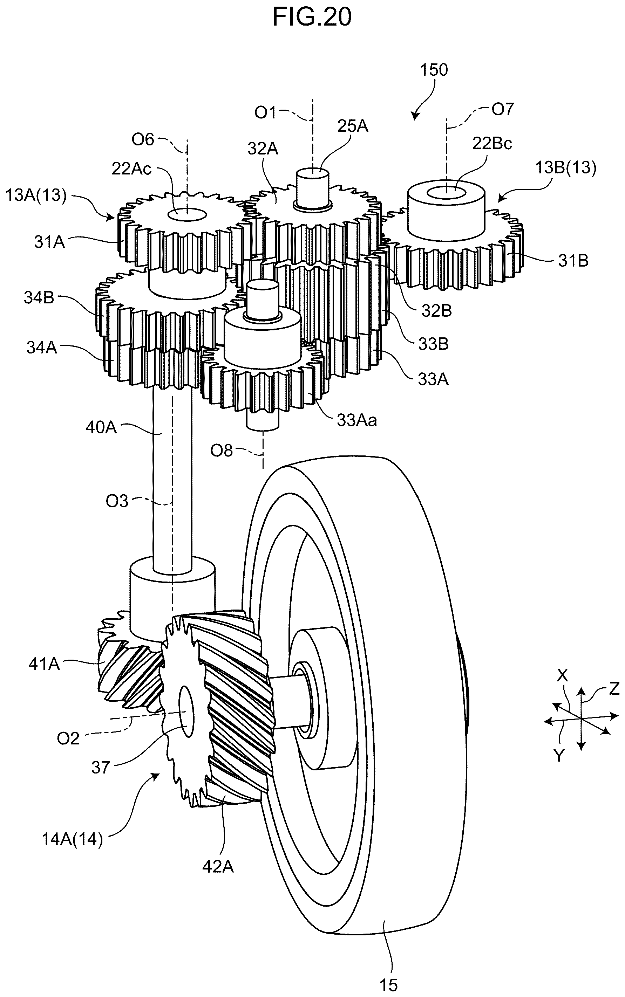

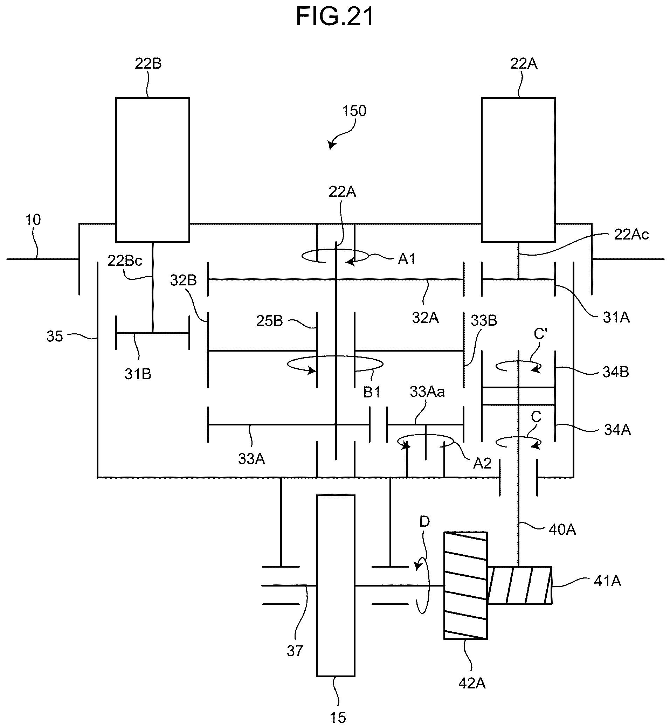

FIG. 18 is a perspective view illustrating a basic configuration of a drive wheel of a fifth embodiment. FIG. 19 is a right side view illustrating a drive system of the drive wheel of the fifth embodiment. FIG. 20 is a perspective view illustrating the drive system of the drive wheel of the fifth embodiment. FIG. 21 is a schematic diagram illustrating a driving force transmission path of the drive wheel of the fifth embodiment.

A drive wheel 150 of the fifth embodiment is different from the drive wheel 110 described above in the configurations of the transmission mechanism 13 and the power conversion mechanism 14. In the following description of the drive wheel 150 of the fifth embodiment, the same reference numerals are given to the same portions as those of the drive wheel 110 described above, and the description thereof will be omitted.

The transmission mechanism 13 has the first transmission gear mechanism (first transmission mechanism) 13A and the second transmission gear mechanism (second transmission mechanism) 13B.

The first transmission gear mechanism 13A transmits the rotational force of the first drive shaft 22Ac to the first output shaft 40A via the first input shaft 25A. The first transmission gear mechanism 13A includes the first transmission drive gear 31A, a first transmission main-driven gear 32A, the first transmission sub-driven gear 33A, a rotation reversing gear 33Aa, and the first transmission output gear 34A. In the drive wheel 150, the first transmission drive gear 31A, the first transmission main-driven gear 32A, the first transmission sub-driven gear 33A, the rotation reversing gear 33Aa, and the first transmission output gear 34A are spur gears.

In the first transmission gear mechanism 13A, the first transmission drive gear 31A is fixed to the first drive shaft 22Ac of the first drive mechanism 22A, and rotates about the axis O6 of the first drive shaft 22Ac by the rotational force generated by the first drive mechanism 22A. Therefore, the first transmission main-driven gear 32A and the first transmission sub-driven gear 33A are fixed to the first input shaft 25A, and rotate about the axis O1 of the first input shaft 25A. The rotation reversing gear 33Aa is supported with respect to the turning shaft 35 via a bearing (not illustrated) so as to be rotatable about an axis O8 parallel to the axes O1 and O3. Therefore, the first transmission output gear 34A is fixed to the first output shaft 40A, and rotates about the axis O3 of the first output shaft 40A. The first transmission main-driven gear 32A meshes with the first transmission drive gear 31A. The first transmission sub-driven gear 33A meshes with the rotation reversing gear 33Aa. The first transmission output gear 34A meshes with the rotation reversing gear 33Aa. Therefore, the first transmission gear mechanism 13A transmits the rotational force of the first drive mechanism 22A from the first transmission drive gear 31A to the first transmission main-driven gear 32A and applies the rotational force to the first input shaft 25A, and further reverses the rotational force of the first input shaft 25A from the first transmission sub-driven gear 33A by the rotation reversing gear 33Aa, transmits the reversed rotational force to the first transmission output gear 34A, and applies the rotational force to the first output shaft 40A.

The second transmission gear mechanism 13B transmits the rotational force of the second drive shaft 22Bc to the first output shaft 40A via the second input shaft 25B. Here, in the drive wheel 150, the output shaft includes a single first output shaft 40A and does not have a second output shaft. The second transmission gear mechanism 13B includes a second transmission drive gear 31B, a second transmission main-driven gear 32B, a second transmission sub-driven gear 33B, and a second transmission output gear 34B. In the drive wheel 150 of the embodiment, the second transmission drive gear 31B, the second transmission main-driven gear 32B, the second transmission sub-driven gear 33B, and the second transmission output gear 34B are spur gears.

In the second transmission gear mechanism 13B, the second transmission drive gear 31B is fixed to the second drive shaft 22Bc of the second drive mechanism 22B, and rotates about the axis O7 of the second drive shaft 22Bc with the rotational force generated by the second drive mechanism 22B. The second transmission main-driven gear 32B and the second transmission sub-driven gear 33B are fixed to the second input shaft 25B, and rotate about the axis O1 of the second input shaft 25B. The second transmission main-driven gear 32B and the second transmission sub-driven gear 33B are disposed between the first transmission main-driven gear 32A and the first transmission sub-driven gear 33A of the first transmission gear mechanism 13A. The second transmission output gear 34B is fixed to the first output shaft 40A, and rotates about the axis O3 of the first output shaft 40A. The second transmission main-driven gear 32B meshes with the second transmission drive gear 31B. The second transmission output gear 34B meshes with the second transmission sub-driven gear 33B. Therefore, the second transmission gear mechanism 13B transmits the rotational force of the second drive mechanism 22B from the second transmission drive gear 31B to the second transmission main-driven gear 32B and applies the rotational force to the second input shaft 25B, and further transmits the rotational force of the second input shaft 25B from the second transmission sub-driven gear 33B to the second transmission output gear 34B and applies the rotational force to the first output shaft 40A.

The power conversion mechanism 14 has the first conversion gear mechanism (first power conversion mechanism) 14A. The first conversion gear mechanism 14A includes the first conversion drive gear 41A and the first conversion driven gear 42A. The drive wheel 150 does not have the second conversion gear mechanism (second power conversion mechanism). In the drive wheel 150, the first conversion gear mechanism 14A includes screw gears.

The first conversion drive gear 41A is fixed to a lower portion of the first output shaft 40A. Therefore, the first conversion drive gear 41A rotates about the axis O3 together with the first output shaft 40A. In addition, the first conversion driven gear 42A is fixed to one end portion of the axle 37. Therefore, the first conversion driven gear 42A rotates about the axis O2 together with the axle 37. Then, the first conversion drive gear 41A meshes with the first conversion driven gear 42A. Therefore, the first conversion gear mechanism 14A converts rotation about the axis O3 of the first output shaft 40A into rotation about the axis O2 of the axle 37.

Here, the operation of the drive wheel 150 will be described. As illustrated in FIG. 21, in the drive wheel 150, when the first input shaft 25A is rotated in an A1 direction, the first transmission main-driven gear 32A and the first transmission sub-driven gear 33A rotate in the same direction, and the rotation reversing gear 33Aa meshing with the first transmission sub-driven gear 33A rotates in the A2 direction opposite to the A1 direction. When the rotation reversing gear 33Aa rotates in the A2 direction, the first transmission output gear 34A meshing with the rotation reversing gear 33Aa rotates in a C direction opposite to the A2 direction. When the first transmission output gear 34A rotates in the C direction, the first conversion drive gear 41A integrally provided on the first transmission output gear 34A via the first output shaft 40A rotates in the same direction. Then, the first conversion driven gear 42A meshing with the first conversion drive gear 41A rotates in a D direction, and the axle 37 integrated with the first conversion driven gear 42A is rotated in the same direction. On the other hand, in the drive wheel 150, when the second input shaft 25B is rotated in a B1 direction opposite to the A1 direction, the second transmission main-driven gear 32B and the second transmission sub-driven gear 33B rotate in the same direction, and the second transmission output gear 34B meshing with the second transmission sub-driven gear 33B rotates in a C' direction that is opposite to the B1 direction and is the same direction as the C direction. When the second transmission output gear 34B rotates in the C' direction, the first conversion drive gear 41A integrally provided on the second transmission output gear 34B via the first output shaft 40A rotates in the same direction. Then, the first conversion driven gear 42A meshing with the first conversion drive gear 41A rotates in a D direction, and the axle 37 integrated with the first conversion driven gear 42A is rotated in the same direction.

At this time, in the drive wheel 150, when the number of rotations of the second input shaft 25B is reduced with respect to the number of rotations of the first input shaft 25A, the numbers of rotations input to the second transmission main-driven gear 32B and the second transmission sub-driven gear 33B become lower than the numbers of rotations input to the first transmission main-driven gear 32A and the first transmission sub-driven gear 33A. Then, the turning shaft 35 rotates by a difference in the number of rotations, and turns and steers the wheel 15. In addition, in the drive wheel 150, when the rotation of the first input shaft 25A or the second input shaft 25B is stopped, the numbers of rotations input to the first transmission main-driven gear 32A and the first transmission sub-driven gear 33A or the numbers of rotations input to the second transmission main-driven gear 32B and the second transmission sub-driven gear 33B become 0, and the wheel 15 is turned and steered without being rotated.

As illustrated in FIG. 21, the drive wheel 150 and the carriage 100 can be operated similarly to the drive wheel 110 and the carriage 100 of the first embodiment, and can obtain the same operation and effect as the drive wheel 110 and the carriage 100.

In particular, in the drive wheel 150, the output shaft is the single first output shaft 40A and the first transmission output gear 34A and the second transmission output gear 34B are fixed coaxially with the first output shaft 40A, the first transmission gear mechanism 13A has the rotation reversing gear 33Aa with which the first transmission sub-driven gear 33A meshes and the rotation reversing gear 33Aa meshes with the first transmission output gear 34A, and in the second transmission gear mechanism 13B, the second transmission sub-driven gear 33B meshes with the second transmission output gear 34B.

According to the drive wheel 150, the rotational force of the first input shaft 25A and the second input shaft 25B is transmitted to the first output shaft 40A. Furthermore, in the drive wheel 150, the first conversion gear mechanism 14A transmits the rotational force of the first output shaft 40A to the axle 37. As a result, in the drive wheel 150, it is possible to simplify the basic configuration.

In addition, the carriage 100 of the embodiment includes the drive wheel 150 described above and the carriage main body 101 to which the drive wheel 150 is attached. For this reason, in the carriage 100, it is possible to simplify the basic structure.

### (Sixth Embodiment of Drive Wheel)

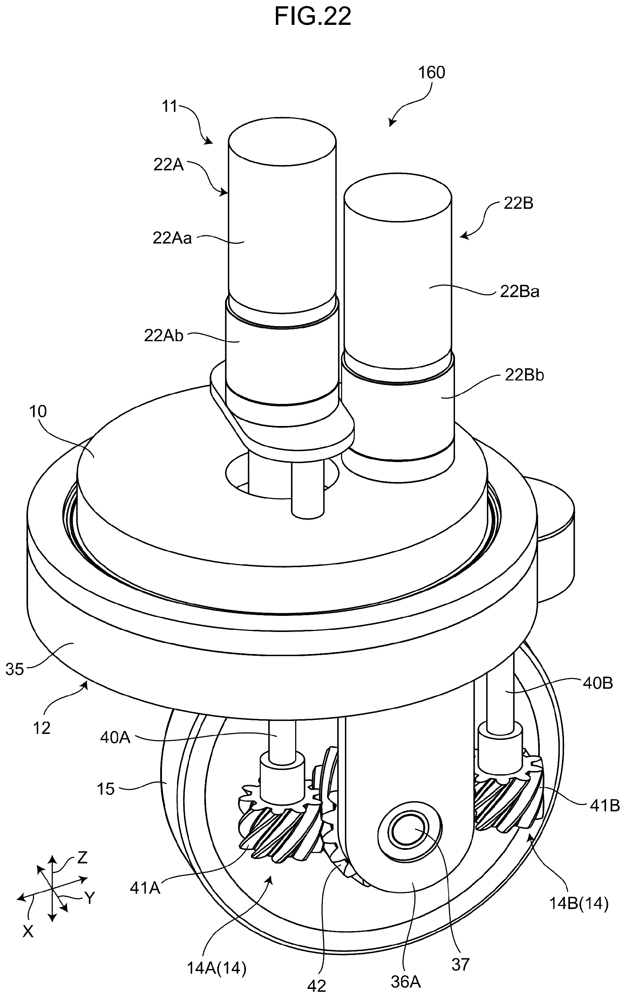

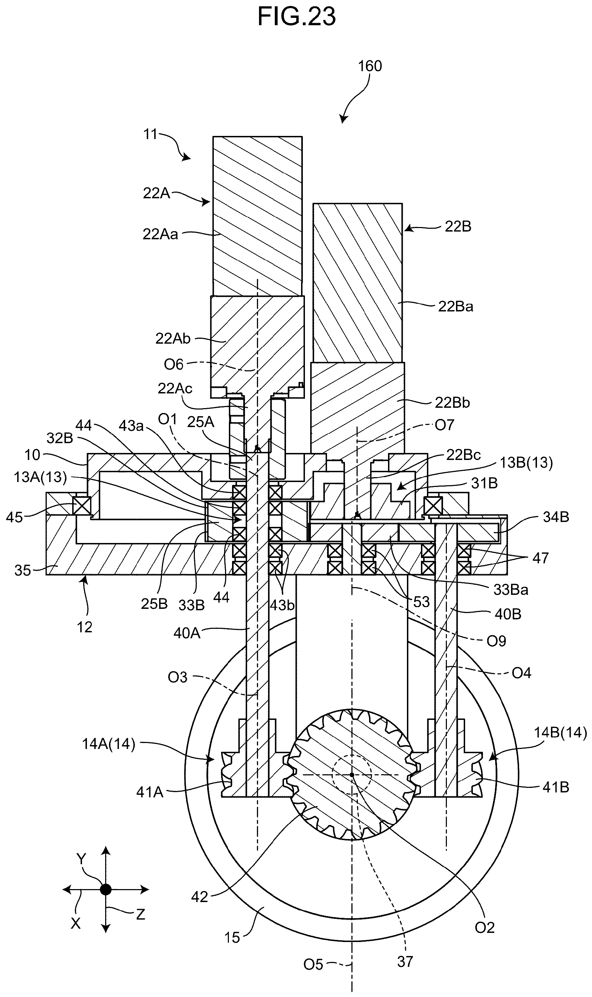

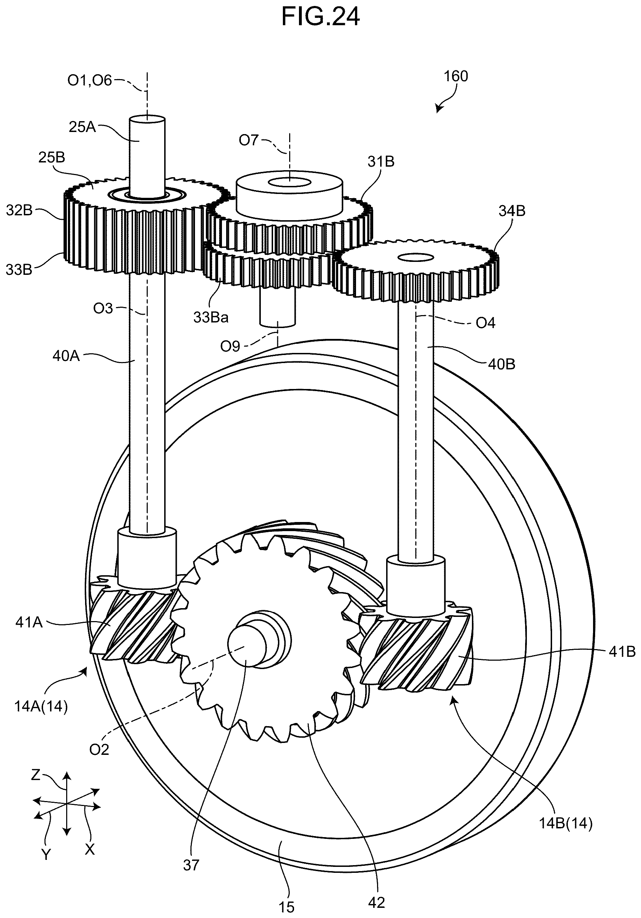

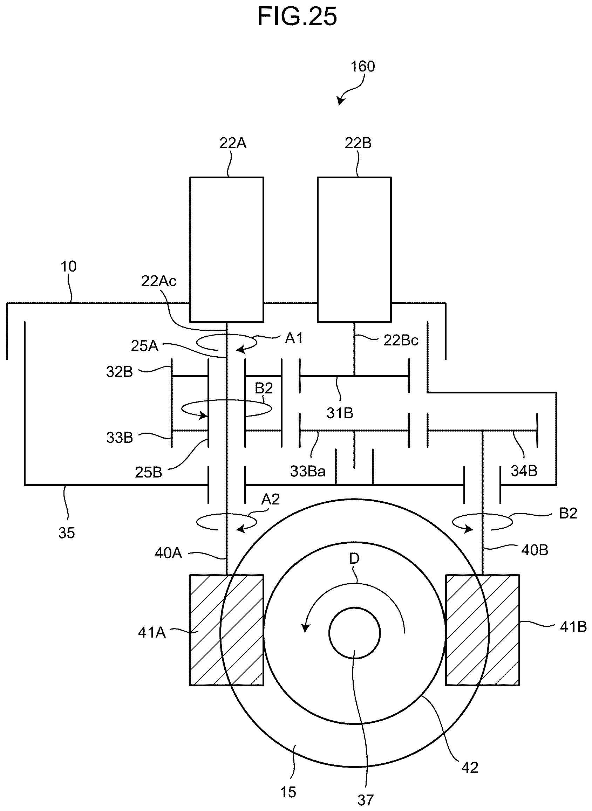

FIG. 22 is a perspective view illustrating a basic configuration of a drive wheel of a sixth embodiment. FIG. 23 is a cross-sectional view illustrating a drive system of the drive wheel of the sixth embodiment. FIG. 24 is a perspective view illustrating the drive system of the drive wheel of the sixth embodiment. FIG. 25 is a schematic diagram illustrating a driving force transmission path of the drive wheel of the sixth embodiment.

A drive wheel 160 of the sixth embodiment is different from the drive wheel 110 described above in the configurations of the transmission mechanism 13 and the power conversion mechanism 14. In the following description of the drive wheel 160 of the sixth embodiment, the same reference numerals are given to the same portions as those of the drive wheel 110 described above, and the description thereof will be omitted.

The transmission mechanism 13 has the first transmission mechanism 13A and the second transmission gear mechanism (second transmission mechanism) 13B.

The first transmission mechanism 13A transmits the rotational force of the first drive shaft 22Ac to the first output shaft 40A via the first input shaft 25A. In the first transmission mechanism 13A, the first input shaft 25A and the first output shaft 40A are integrally formed and disposed to extend in the up-down direction Z. That is, the first input shaft 25A and the first output shaft 40A can be configured to be the same. The first input shaft 25A and the first output shaft 40A are supported to be rotatable with respect to the main body 10 via the bearing 43b (see FIG. 23). In addition, the first input shaft 25A and the first output shaft 40A are supported to be rotatable with respect to the turning shaft 35 via the bearing 43a (see FIG. 23). Therefore, the first input shaft 25A and the first output shaft 40A are supported to be relatively rotatable with respect to the turning shaft 35 about the axis O1 (axis of the first input shaft 25A) and the axis O3 (axis of the first output shaft 40A) that are coaxial with each other, and are also supported to be relatively rotatable with respect to the main body 10 about the axes O1 and O3. That is, the turning shaft 35 is provided to be rotatable with respect to the main body 10 regardless of the rotation of the first input shaft 25A. For this reason, in the drive wheel 160 of the embodiment, it is possible to input the rotational force to the first input shaft 25A on the axis O1 which is a turning axis of the wheel 15.

In addition, in the first transmission mechanism 13A, the first input shaft 25A is integrally fixed to the first drive shaft 22Ac of the first drive mechanism 22A, and rotates about the axis O6 of the first drive shaft 22Ac by the rotational force generated by the first drive mechanism 22A. That is, the axis O1 of the first input shaft 25A, the axis O3 of the first output shaft 40A, and the axis O6 of the first drive shaft 22Ac are coaxially disposed integrally and rotate integrally.

The second transmission gear mechanism 13B transmits the rotational force of the second drive shaft 22Bc to the second output shaft 40B via the second input shaft 25B. The second transmission gear mechanism 13B includes the second transmission drive gear 31B, the second transmission main-driven gear 32B, the second transmission sub-driven gear 33B, a rotation reversing gear 33Ba, and the second transmission output gear 34B. In the drive wheel 160 of the embodiment, the second transmission drive gear 31B, the second transmission main-driven gear 32B, the second transmission sub-driven gear 33B, the rotation reversing gear 33Ba, and the second transmission output gear 34B are spur gears.

In the second transmission gear mechanism 13B, the second transmission drive gear 31B is fixed to the second drive shaft 22Bc of the second drive mechanism 22B, and rotates about the axis O7 of the second drive shaft 22Bc with the rotational force generated by the second drive mechanism 22B. The second transmission main-driven gear 32B and the second transmission sub-driven gear 33B are fixed to the second input shaft 25B, and rotate about the axis O1 of the second input shaft 25B. The rotation reversing gear 33Ba is supported with respect to the turning shaft 35 via a bearing 53 (see FIG. 23) so as to be rotatable about an axis O9 parallel to the axes O1 and O4. The second transmission output gear 34B is fixed to the second output shaft 40B, and rotates about the axis O4 of the second output shaft 40B. The second transmission main-driven gear 32B meshes with the second transmission drive gear 31B. The rotation reversing gear 33Ba meshes with the second transmission sub-driven gear 33B. The second transmission output gear 34B meshes with the rotation reversing gear 33Ba. Therefore, the second transmission gear mechanism 13B transmits the rotational force of the second drive mechanism 22B from the second transmission drive gear 31B to the second transmission main-driven gear 32B and applies the rotational force to the second input shaft 25B, and further reverses the rotational force of the second input shaft 25B from the second transmission sub-driven gear 33B by the rotation reversing gear 33Ba, transmits the reversed rotational force to the second transmission output gear 34B, and applies the rotational force to the second output shaft 40B.

The power conversion mechanism 14 has the first conversion gear mechanism (first power conversion mechanism) 14A and the second conversion gear mechanism (second power conversion mechanism) 14B.

The first conversion gear mechanism 14A transmits the rotational force of the first output shaft 40A to the axle 37. The first conversion gear mechanism 14A includes the first conversion drive gear 41A and a conversion driven gear 42. In the drive wheel 160, the first conversion drive gear 41A and the conversion driven gear 42 are screw gears.

The first conversion drive gear 41A is fixed to a lower portion of the first output shaft 40A, and rotates about the axis O3 together with the first output shaft 40A. In addition, the conversion driven gear 42 is fixed to the axle 37, and rotates about the axis O2 of the axle 37. Then, the first conversion drive gear 41A meshes with the conversion driven gear 42. Therefore, the first conversion gear mechanism 14A converts rotation about the axis O3 of the first output shaft 40A into rotation about the axis O2 of the axle 37.

The second conversion gear mechanism 14B transmits the rotational force of the second output shaft 40B to the axle 37. The second conversion gear mechanism 14B includes the second conversion drive gear 41B and the conversion driven gear 42. In the drive wheel 160, the second conversion drive gear 41B is a screw gear.

The second conversion drive gear 41B is fixed to a lower portion of the second output shaft 40B and rotates about the axis O4 together with the second output shaft 40B. Then, the second conversion drive gear 41B meshes with the conversion driven gear 42. Therefore, the second conversion gear mechanism 14B converts rotation about the axis O4 of the second output shaft 40B into rotation about the axis O2 of the axle 37.

In the power conversion mechanism 14, the first conversion drive gear 41A of the first conversion gear mechanism 14A and the second conversion drive gear 41B of the second conversion gear mechanism 14B have the same pitch circle diameter and the same number of teeth.

In addition, in the drive wheel 160, the first output shaft 40A and the second output shaft 40B are both disposed on one end side of the axle 37. Then, in the first output shaft 40A, the axis O1 which is a center of the turning shaft 35 and the axis O3 are coaxially disposed. In addition, in the second output shaft 40B, the axis O4 is disposed to be shifted in the front-rear direction X with respect to the axis O3 of the first output shaft 40A. Then, in the power conversion mechanism 14, the first conversion drive gear 41A is fixed to the first output shaft 40A, the second conversion drive gear 41B is fixed to the second output shaft 40B, and the first conversion drive gear 41A and the second conversion drive gear 41B both mesh with the conversion driven gear 42 fixed to the axle 37. With this configuration, in the drive wheel 160, the rotation axis O5 of the wheel 15 in the vertical direction intersecting the axis O2 of the axle 37 is disposed to be shifted (offset) in a horizontal direction (substantially the front-rear direction X) orthogonal to the axis O2 of the axle 37 with respect to the axis O1 of the turning shaft 35.

Here, the operation of the drive wheel 160 will be described. As shown in FIG. 25, when the drive wheel 160 rotates the first input shaft 25A in the A1 direction, the first output shaft 40A integrated with the first input shaft 25A rotates in the A2 direction of the same direction, and the first conversion drive gear 41A rotates in the same direction via the first output shaft 40A. Then, the conversion driven gear 42 meshing with the first conversion drive gear 41A rotates in the D direction, and applies a rotational force in the D direction to the axle 37 integrated with the conversion driven gear 42. On the other hand, in the drive wheel 160, when the second input shaft 25B is rotated in a B1 direction opposite to the A1 direction, the second transmission main-driven gear 32B and the second transmission sub-driven gear 33B rotate in the same direction. Then, the second transmission output gear 34B rotates in the B2 direction opposite to the A2 direction of the first output shaft 40A via the rotation reversing gear 33Ba meshing with the second transmission sub-driven gear 33B. When the second transmission output gear 34B rotates in the B2 direction, the second conversion drive gear 41B integrally provided on the second transmission output gear 34B via the second output shaft 40B rotates in the same direction. Then, the conversion driven gear 42 meshing with the second conversion drive gear 41B rotates in the D direction, and applies a rotational force in the D direction to the axle 37 integrated with the conversion driven gear 42. Here, since the A2 direction and the B2 direction are opposite rotation directions, if the first input shaft 25A and the second input shaft 25B have the same number of rotations, the wheel 15 rotates without turning.

At this time, in the drive wheel 160, when the number of rotations of the second input shaft 25B is reduced with respect to the number of rotations of the first input shaft 25A, the number of rotations input from the second conversion drive gear 41B to the axle 37 via the conversion driven gear 42 becomes lower than the number of rotations input from the first conversion drive gear 41A to the axle 37 via the conversion driven gear 42. Then, the turning shaft 35 rotates by a difference in the number of rotations, and turns and steers the wheel 15. In addition, in the drive wheel 160, when the rotation of the first input shaft 25A or the second input shaft 25B is stopped, the number of rotations input from the first conversion drive gear 41A or the second conversion drive gear 41B to the axle 37 via the conversion driven gear 42 becomes 0, and the wheel 15 is turned and steered without being rotated.

As illustrated in FIG. 21, the drive wheel 160 and the carriage 100 can be operated similarly to the drive wheel 110 and the carriage 100 of the first embodiment, and can obtain the same operation and effect as the drive wheel 110 and the carriage 100.

In particular, in the drive wheel 160, the rotational force of the first input shaft 25A is directly transmitted to the first output shaft 40A. Further, in the drive wheel 160, the first conversion gear mechanism 14A transmits the rotational force of the first output shaft 40A to the conversion driven gear 42 which is a predetermined portion of the axle 37, and the second conversion gear mechanism 14B transmits the rotational force of the second output shaft 40B to the conversion driven gear 42 which is the predetermined portion of the axle 37. As a result, in the drive wheel 160, it is possible to simplify the basic configuration.

In addition, the carriage 100 of the embodiment includes the drive wheel 160 described above and the carriage main body 101 to which the drive wheel 160 is attached. For this reason, in the carriage 100, it is possible to simplify the basic structure.

### (Modification Example)

In the drive wheels 110, 120, 130, 140, 150, and 160 described above, the transmission mechanism 13 has been described as a spur gear, but the invention is not limited thereto. For example, the transmission mechanism 13 may include a helical gear. In addition, in the drive wheels 110, 120, 130, and 140 described above, the power conversion mechanism 14 has been described as a bevel gear, but the invention is not limited thereto. For example, although not illustrated in the drawing, the power conversion mechanism 14 may be a screw gear, a helical gear, a worm gear, a crown gear, a universal joint, or the like. In addition, in the drive wheel 150 described above, the power conversion mechanism 14 has been described as a screw gear, but the invention is not limited thereto. For example, although not illustrated in the drawing, the power conversion mechanism 14 may be a bevel gear, a helical gear, a worm gear, a crown gear, a universal joint, or the like. In addition, in the drive wheel 160 described above, the power conversion mechanism 14 has been described as a screw gear, but the invention is not limited thereto. For example, although not illustrated in the drawing, the power conversion mechanism 14 may be a bevel gear, a helical gear, a worm gear, a crown gear, or the like.

### Reference Signs List

13A FIRST TRANSMISSION GEAR MECHANISM (FIRST TRANSMISSION MECHANISM)
13B SECOND TRANSMISSION GEAR MECHANISM (SECOND TRANSMISSION MECHANISM)
14A FIRST CONVERSION GEAR MECHANISM (FIRST POWER CONVERSION MECHANISM)
14B SECOND CONVERSION GEAR MECHANISM (SECOND POWER CONVERSION MECHANISM)
15 WHEEL
22A FIRST DRIVE MECHANISM
22Ac FIRST DRIVE SHAFT
22B SECOND DRIVE MECHANISM
22Bc SECOND DRIVE SHAFT
23A FIRST BELT MECHANISM
23B SECOND BELT MECHANISM
25A FIRST INPUT SHAFT
25B SECOND INPUT SHAFT
25C ANGLE DETECTION SHAFT
31A FIRST TRANSMISSION DRIVE GEAR
31B SECOND TRANSMISSION DRIVE GEAR
32A FIRST TRANSMISSION MAIN-DRIVEN GEAR
32B SECOND TRANSMISSION MAIN-DRIVEN GEAR
33Aa ROTATION REVERSING GEAR
33A FIRST TRANSMISSION SUB-DRIVEN GEAR
33B SECOND TRANSMISSION SUB-DRIVEN GEAR
34A FIRST TRANSMISSION OUTPUT GEAR
34B SECOND TRANSMISSION OUTPUT GEAR
35 TURNING SHAFT
37 AXLE
40A FIRST OUTPUT SHAFT (OUTPUT SHAFT)
40B SECOND OUTPUT SHAFT (OUTPUT SHAFT)
50 ANGLE DETECTOR
100 CARRIAGE
101 CARRIAGE MAIN BODY
110, 120, 130, 140, 150, 160 DRIVE WHEEL

## Claims

1. A drive wheel comprising:
a first drive mechanism having a first drive shaft;
a second drive mechanism having a second drive shaft;
a first input shaft and a second input shaft that are coaxial with each other;
an output shaft;
a first transmission mechanism that transmits a rotational force of the first drive shaft to the output shaft via the first input shaft;
a second transmission mechanism that transmits a rotational force of the second drive shaft to the output shaft via the second input shaft;
a rotatable axle to which a wheel is fixed;
a power conversion mechanism that transmits a rotational force of the output shaft to the axle; and
a turning shaft that turnably supports the wheel via the axle,
wherein the second transmission mechanism includes a gear that is fixed to the second input shaft and play-fitted around the first input shaft.

2. The drive wheel according to claim 1,
wherein the first transmission mechanism includes a first transmission drive gear fixed to the first drive shaft, a first transmission main-driven gear fixed to the first input shaft and meshing with the first transmission drive gear, and a first transmission sub-driven gear fixed to the first input shaft and configured to transmit a rotational force to the output shaft, and
wherein the second transmission mechanism includes a second transmission drive gear fixed to the second drive shaft, a second transmission main-driven gear fixed to the second input shaft and meshing with the second transmission drive gear, and a second transmission sub-driven gear fixed to the second input shaft integrally with the second transmission main-driven gear and configured to transmit a rotational force to the output shaft.

3. The drive wheel according to claim 1,
wherein the output shaft includes a first output shaft and a second output shaft on different axes, and
wherein the first transmission mechanism transmits a rotational force of the first input shaft to the first output shaft,
wherein the second transmission mechanism transmits a rotational force of the second input shaft to the second output shaft, and
wherein the power conversion mechanism includes a first power conversion mechanism that transmits a rotational force of the first output shaft to one end portion of the axle and a second power conversion mechanism that transmits a rotational force of the second output shaft to the other end portion of the axle.

4. The drive wheel according to claim 1,
wherein the first drive mechanism includes a first drive unit having the first drive shaft as an output shaft, and
wherein the second drive mechanism includes a second drive unit having the second drive shaft as an output shaft.

5. The drive wheel according to claim 1,
wherein the first drive mechanism applies a rotational force to the first drive shaft via a first belt mechanism, and
wherein the second drive mechanism applies a rotational force to the second drive shaft via a second belt mechanism.

6. The drive wheel according to claim 1, further comprising
an angle detection shaft that is disposed coaxially with the first input shaft and the second input shaft and fixed to the turning shaft and to which an angle detector is connected.

7. The drive wheel according to claim 2,
wherein, in the first transmission mechanism, the first transmission main-driven gear has a pitch circle diameter smaller than that of the first transmission sub-driven gear, and
wherein, in the second transmission mechanism, the second transmission main-driven gear has a pitch circle diameter smaller than that of the second transmission sub-driven gear.

8. The drive wheel according to claim 2,
wherein the output shaft is single and a first transmission output gear and a second transmission output gear are fixed coaxially with the output shaft, and
wherein the first transmission mechanism has a rotation reversing gear with which the first transmission sub-driven gear meshes and the rotation reversing gear meshes with the first transmission output gear, and
wherein, in the second transmission mechanism, the second transmission sub-driven gear meshes with the second transmission output gear.

9. The drive wheel according to claim 1,
wherein the output shaft includes a first output shaft and a second output shaft on different axes, and
wherein the first transmission mechanism integrally connects the first input shaft and the first output shaft, and
wherein the power conversion mechanism includes a first power conversion mechanism that transmits a rotational force of the first output shaft to a predetermined portion of the axle and a second power conversion mechanism that transmits a rotational force of the second output shaft to the predetermined portion of the axle.

10. The drive wheel according to claim 9,
wherein the first drive shaft of the first drive mechanism is integrally connected to the first input shaft, and
wherein a gear of the second transmission mechanism is fixed to the second drive shaft of the second drive mechanism.

11. The drive wheel according to any one of claims 1 to 10,
wherein a rotation axis of the wheel aligned with a vertical direction and intersecting an axis of the axle is disposed to be shifted in a horizontal direction orthogonal to the axis of the axle with respect to an axis of the turning shaft.

12. A carriage comprising:
a drive wheel; and
a carriage main body to which the drive wheel is attached,
wherein the drive wheel includes:
a first drive mechanism having a first drive shaft;
a second drive mechanism having a second drive shaft;
a first input shaft and a second input shaft that are coaxial with each other;
an output shaft;
a first transmission mechanism that transmits a rotational force of the first drive shaft to the output shaft via the first input shaft;
a second transmission mechanism that transmits a rotational force of the second drive shaft to the output shaft via the second input shaft;
a rotatable axle to which a wheel is fixed;
a power conversion mechanism that transmits a rotational force of the output shaft to the axle; and
a turning shaft that turnably supports the wheel via the axle, and
wherein the second transmission mechanism includes a gear that is fixed to the second input shaft and play-fitted around the first input shaft.
